# FASCICULE DE BREVET EUROPEEN

(11) **EP 3 648 572 B1**
(45) Date de publication et mention de la délivrance du brevet: **28.09.2022**
(21) Numéro de dépôt: 18738381.5
(22) Date de dépôt: 09.07.2018
(51) Int. Cl.: A01G 9/16, A01G 9/14, A01G 9/24

(54) **SERRE AGRICOLE DÉPLAÇABLE RIGIDIFIÉE PAR DES ENTRETOISES SOUPLES**
VERSTELLBARES GEWÄCHSHAUS VERSTÄRKT DURCH FLEXIBLE ABSTANDSHALTER
DISPLACABLE GREENHOUSE RIGIDIFIED BY FLEXIBLE SPACERS

(30) Priorité: 07.07.2017 FR 1770732
(43) Date de publication de la demande: 13.05.2020
(73) Titulaire: Barre, André, 47320 Clairac (FR)
(72) Inventeur: Barre, André, 47320 Clairac (FR)
(74) Mandataire: Argyma
(86) Numéro de dépôt international: PCT/IB2018/055045
(87) Numéro de publication internationale: WO 2019/008557

(56) Documents cités:
- WO-A1-2008/115065
- FR-A1- 2 834 610
- FR-A1- 2 856 886
- US-A- 3 765 134
- US-A- 4 601 136
- US-A1- 2006 260 209
- US-B1- 6 182 737

## Description

### Domaine technique

La présente invention est du domaine des installations agricoles utilisées pour la culture et la protection des plantes des rigueurs climatiques et des prédateurs et a pour objet une serre déplaçable dotée d'une ossature porteuse d'un nouveau type et d'un système latéral d'aération simplifié à commande centralisée.

### État de la technique antérieure

Habituellement, les serres agricoles, qu'elles soient mono-tunnel ou multi-tunnels sont constituées d'une ossature porteuse, généralement métallique, et d'une couverture souple, transparente à la lumière, apposée et tendue sur l'ossature. Une telle couverture forme une séparation entre le volume interne de la serre et le milieu extérieur et constitue une barrière tant au froid qu'aux insectes.

Typiquement, l'ossature métallique de chaque tunnel de serre est formée d'arceaux parallèles, équidistants, organisés selon un rang rectiligne. Des lisses métalliques entretoisent les différents arceaux afin de former un ensemble rigide apte à résister, sans se déformer de manière plastique, aux différentes contraintes mécaniques susceptibles d'être encaissées par la serre.

Par exemple, on peut citer la serre décrite dans le document FR 2 856 886, dont l'ossature destinée à supporter une couverture souple, comprend plusieurs arceaux parallèles, comportant chacun un élément cintré et des tiges de rigidification qui forment un croisillon sous le faite des éléments cintrés. Les croisillons supportent des entretoises de sorte que les arceaux sont reliés entre eux par celles-ci. Tous les éléments de l'ossature sont réalisés en matériau tubulaire métallique, par exemple en aluminium.

Le ou chaque tunnel de la serre est pourvu d'un ou plusieurs systèmes d'aération. Typiquement, ces systèmes d'aération sont formés par des volets manoeuvrables à distance. Habituellement, ces volets comprennent, chacun, une ossature rigide de volet recouverte d'une toile en matière synthétique transparente à la lumière. Ces volets sont articulés à l'ossature de la serre et sont commandés à distance, en ouverture et fermeture, par des moyens appropriés.

Ces installations, telles que succinctement décrites, sont prévues pour être implantées de manière permanente sur une parcelle de terre utilisable pour la culture et la croissance des plantes vivrières ou autres plantes. Ainsi la serre maintient au-dessus de cette parcelle cultivable, un volume protégé des intempéries et apte à conserver la chaleur. La chaleur interne de la serre est bien entendu régulée par les volets d'aération pour éviter tout excès de température en période estivale.

Un des inconvénients de telles serres réside essentiellement dans le fait que leur présence permanente sur l'aire de culture favorise d'une part l'épuisement de la couche arable et d'autre part le développement d'une vermine apte à s'attaquer aux cultures. L'épuisement du sol est habituellement compensé par un apport important d'engrais issus de l'industrie chimique tandis que l'infestation de la couche arable est combattue par un épandage, en quantité non négligeable, de produits phytosanitaires et ce avant et après la mise en terre des semences ou des plantes.

De telles pratiques sont incompatibles avec celles de l'agriculture biologique. En effet l'agriculture biologique doit répondre à des cahiers de charges relativement contraignants, interdisant les techniques de traitement des sols et des plantes telles que pratiquées par la majorité des maraichers. Ainsi, en vue de la régénération des sols, sont privilégiés soit les engrais naturels tels que fumures et autres matières organiques, soit la mise en jachère des parcelles cultivées et ce pour une période plus ou moins longue. Cependant l'implantation permanente des serres rend impossible l'utilisation de la technique de mise en jachère. Une solution à ce problème est proposée dans le brevet FR 2 834 610. La serre selon ce brevet est conçue apte à être déplacée et est formée de modules d'ossature aboutés les uns aux autres, chaque module d'ossature étant constitué de plusieurs arceaux parallèles réunis les uns aux autres par des lisses sommitales et latérales. Chaque arceau présente deux formes de piètement, rectilignes, verticales, prévues pour être emboitées dans des fourreaux verticaux préalablement enfichés dans le sol. Cette disposition facilite la mise en place ou le retrait de chaque module de structure et par voie de conséquence, facilite grandement les opérations de déplacement de la serre.

Une mise en jachère périodique des sols, qui suppose le gel d'au moins un tiers des surfaces cultivables, engendre, de ce fait, des coûts d'exploitation plus importants. Ces coûts peuvent être diminués par une augmentation significative du rendement, mais à ce jour, cette augmentation de rendement ne peut être obtenue que par emploi de moyens et techniques incompatibles avec l'agriculture biologique. Une autre voie consiste à diminuer les coûts d'investissement et donc à utiliser des serres peu coûteuses à l'achat.

Cependant de telles serres sont bien souvent résistantes et la plupart d'entre elles sont démunies de moyens mécanisés d'aération, coûteux en soi.

L'aération de telles serres est habituellement opérée par relevage à la main de l'un ou des deux côtés longitudinaux de la couverture de la serre, et, pour des raisons de coût, elles sont dépourvues de tout moyen de recueil des eaux de pluie de sorte que l'eau s'écoulant de la couverture forme au bas de cette dernière des zones fortement détrempées.

### Exposé de l'invention

La présente invention a pour objet de résoudre les inconvénients cités en proposant une serre déplaçable, dotée notamment de moyens d'aération et de recueil des eaux de pluie tout en étant d'un faible coût. Il est précisé que le terme "déplaçable" signifie que la serre peut être aisément déplacée après un cycle de culture et réinstallée ailleurs, pour mettre alternativement au repos ou en culture des parcelles différentes au fil des saisons, tout en offrant une structure de protection robuste et fonctionnelle. Elle n'est pas mobile au sens où elle n'est pas dotée de moyens de déplacement par roulage ou autre.

À cet effet, la serre selon l'invention, formée d'une ossature porteuse et d'une couverture étanche transparente à la lumière montée en fixation sur l'ossature, laquelle ossature est formée de deux arceaux d'extrémité et d'arceaux intermédiaires, les dits arceaux d'extrémité et intermédiaires étant parallèles, équidistants et réunis les uns aux autres par au moins une entretoise, chaque arceau comportant deux formes de piètement rectilignes verticales par lesquelles il est encastré à deux pieux enfichés dans le sol et ladite couverture étant maintenue sur les deux arceaux d'extrémité par des organes de pinces et sur les arceaux intermédiaires, par des filins installés sur elle et disposés en tension deux à deux de part et d'autre de chaque arceau intermédiaire, ladite couverture par appui sur l'ossature formant un dôme en partie supérieure et deux flancs latéraux longitudinaux s'étendant depuis le dôme formé vers le sol, se caractérise essentiellement en ce que ladite entretoise est formée par un élément souple fixé aux différents arceaux, et que ladite entretoise souple est disposée en tension entre ces derniers et est recouverte par la couverture.

L'entretoise selon l'invention est qualifiée de souple car elle peut se plier et replier facilement sans se casser ni se détériorer, comme peut le faire une bande de tissus ou un film de polyéthylène, ou tout autre matériau pouvant se déformer sans nécessité de lui appliquer une force extérieure autre que son propre poids. Elle se distingue des objets flexibles en ce qu'elle ne subit pas une déformation élastique lorsqu'elle est soumise à l'action de forces contraignantes.

L'usage d'une entretoise souple permet de diminuer le coût de la serre. En outre, cette entretoise souple, de largeur significative, forme une protection entre la couverture et chaque arceau. Est évité ainsi le contact direct entre les arceaux et la couverture dans la ou les zones soumises à plus forte pression, cette ou ces dites zones étant occupées par la ou les entretoises souples.

Selon un autre aspect de l'invention, l'entretoise souple ou l'une des entretoises souples occupe une position sommitale.

Selon un autre aspect de l'invention, deux des entretoises souples occupent des positions latérales situées au-dessus chacune d'un des flancs latéraux.

Selon un autre aspect de l'invention, les deux arceaux avant et les deux arceaux arrière de l'ossature de la serre, sont entretoisés par des membrures rigides et forment deux ensembles indépendants indéformables aptes à encaisser les efforts de traction appliqués par l'entretoise souple. Est évitée ainsi la déformation en flexion des arceaux. En outre, une telle disposition permet le déplacement de chacun de ces deux ensembles rigides sans avoir à les démonter en préalable.

Selon un autre aspect de l'invention, l'entretoise souple est formée par une gaine gonflable. Une telle disposition a pour effet, lorsque l'entretoise souple est gonflée, d'écarter, au moins en zone sommitale, la couverture de chaque arceau intermédiaire. En outre, par gonflement de la gaine, la couverture forme un renflement entre chaque arceau s'opposant d'une part à la formation de poche d'eau en partie sommitale et d'autre part au déplacement des filins de maintien de la couverture. De plus, la gaine souple dans son état gonflé constitue un amortisseur apte à absorber les chocs de la grêle, de la pluie et du vent.

Selon un autre aspect de l'invention, chaque arceau présente une partie supérieure en arc de circonférence de cercle, assemblée à deux montants rectilignes, dont la partie basse de chacun constitue l'une des deux formes de piétement, et dont la partie haute est coudée et reçoit en emboîtement de forme la partie supérieure de l'arceau, chaque montant étant incliné de manière à ce que leurs axes longitudinaux soient sécants en un point situé au-dessus de la partie supérieure de l'arceau. Les formes rectilignes correspondent aux flancs latéraux longitudinaux que forme la couverture de la serre, les différentes parties de l'arceau présentant une section droite quadrangulaire.

Selon un autre aspect de l'invention, entre chaque flanc latéral formé par la couverture et les coudes formé en partie haute des montants des arceaux sont disposées deux entretoises souples latérales, horizontales formant bandes souples de protection, chaque entretoise latérale étant fixée aux différents arceaux et courant d'un arceau d'extrémité à l'autre. Chaque bande est donc interposée entre les arceaux et la couverture et assure une protection de la couverture contre l'usure. Par ailleurs, cette bande de protection, constitue une entretoise entre les différents arceaux.

Selon un autre aspect de l'invention, la ou chaque entretoise latérale est formée par un matériau apte à absorber l'humidité.
Une telle disposition est de nature à réguler le taux d'humidité du volume interne de la serre soit par absorption d'un excès d'humidité soit par restitution de l'humidité préalablement absorbée.

En variante, selon un autre aspect de l'invention, la ou chaque entretoise latérale reçoit un matériau apte à absorber l'humidité et à la restituer.

Selon un autre aspect de l'invention, l'un au moins des deux flancs latéraux que forme la couverture est agencé de manière déplaçable en hauteur pour occuper soit une position de dégagement d'une ouverture latérale d'aération soit une position d'occlusion de cette ouverture.

Selon une autre caractéristique de l'invention, l'ouverture d'aération ou chaque ouverture d'aération est dégagée par relevage du flanc latéral correspondant, la bordure inférieure de ce dernier recevant sur tout son long un bourrelet longitudinal élastiquement déformable tant axialement que radialement, ledit bourrelet, par ses deux extrémités, étant fixé rigidement à la partie inférieure des deux arceaux d'extrémité et ce bourrelet étant mis en tension entre les deux arceaux d'extrémité.

Selon une autre caractéristique de l'invention, le relevage du ou de chaque flanc latéral relevable est opéré de manière manuelle et le montant correspondant de chaque arceau intermédiaire est équipé d'une butée effaçable, apte, lorsqu'elle est en position active, au maintien dudit flanc latéral dans un état replié au-dessus du sol. Cette disposition a pour effet de dégager une ouverture latérale, longitudinale, d'aération du volume interne de la serre.

Alternativement, selon un autre aspect de l'invention, le relevage du ou de chaque flanc latéral relevable est mécanisé et ledit flanc est assujetti à un ensemble de relevage externe, à commande centralisée, par action duquel, la bordure inférieure dudit flanc est écartée du sol afin de dégager une ouverture d'aération ou bien est ramenée en appui sur le sol.

Selon un autre aspect de l'invention, l'ensemble de relevage comprend :
- au moins un module externe de guidage et de maintien occupant une position fixe par rapport aux arceaux et ce au-dessus du flanc latéral relevable correspondant que forme la couverture,
- un organe de commande horizontal guidé et maintenu dans ledit module externe, ledit organe étant assujetti d'une part à un moyen de traction et d'autre part à un organe de rappel,
- au moins une corde de relevage fixée d'une part à la bordure inférieure dudit flanc latéral, et d'autre part à l'organe de commande, ladite corde de relevage, entre la bordure inférieure du flanc latéral et l'organe de commande coopérant en enroulement partiel avec une pièce d'enroulement partiel fixée au module externe de guidage, le point de fixation de la corde de relevage à la bordure inférieure du flanc latéral étant situé à l'aplomb de la pièce d'enroulement partiel.

Par déplacement de l'organe de commande sous l'effet d'un effort de traction appliqué par le moyen de traction, est obtenu le déplacement de la corde de relevage dans le sens du relevage de la partie inférieure du flanc latéral correspondant que forme la couverture. Par relâchement du moyen de traction, l'organe de commande est déplacé dans l'autre sens sous l'effet de l'action du moyen de rappel. Par ce déplacement, ledit flanc latéral, sous l'effet de son propre poids revient dans une position d'occlusion de l'ouverture d'aération précédemment dégagée.

Selon un autre aspect de l'invention, les deux montants de chaque arceau intermédiaire reçoivent un étrier de fixation auquel est fixé au travers de la couverture, un module externe de guidage et de maintien.

Selon un aspect de l'invention, l'organe de commande est formé par une chaîne du type marine. Une telle chaîne, formée par des anneaux liés les uns aux autres, présente l'avantage d'offrir un large choix de points de fixation du ou de chaque corde de relevage, les dits points de fixation étant constitués par les anneaux de la chaîne.

Selon un autre aspect de l'invention, la zone inférieure horizontale de chaque flanc latéral est maintenue relevée vers l'extérieur afin de former une goulotte de recueil et d'évacuation de l'eau de pluie. Dans cette configuration, la bordure inférieure de chaque flanc latéral est située au-dessus du fond de la goulotte formée.

De préférence, selon une autre caractéristique de l'invention, la zone inférieure de chaque flanc latéral est maintenue relevée par la ou chaque corde de relevage. Ainsi la goulotte que comporte chaque flanc latéral est réalisée sans coût supplémentaire.

Selon un autre aspect de l'invention, chaque flanc latéral que forme la couverture de la serre est fixé, par les deux extrémités de sa bordure inférieure, à la partie inférieure des deux arceaux d'extrémité.

Selon un autre aspect de l'invention, un filet anti-insecte est fixé à chaque entretoise latérale, ce filet anti-insecte s'étendant depuis ladite entretoise latérale jusqu'au sol le long des arceaux auxquels il est fixé de manière étanche. Ce filet anti-insecte, perméable à l'air, s'oppose, lorsque le flanc latéral correspondant est relevé, à l'introduction dans la serre des insectes et autres prédateurs.

Selon un autre aspect de l'invention, à chaque flanc latéral que forme la couverture de la serre sont associés des cordages externes de maintien, les dits cordages entre chaque arceau étant agencés en croix. Une telle disposition assure le maintien latéral de chaque flanc latéral et évite la déformation de ce dernier, vers l'extérieur de la serre, sous l'effet par exemple d'une dépression due au vent.

Selon un autre aspect de l'invention à chaque flanc latéral que forme la couverture de la serre sont associé au moins deux cordages internes de maintien lesquels, entre deux arceaux sont agencés en croix. Une telle disposition assure également le maintien latéral de chaque flanc latéral et évite toute déformation de ce dernier vers l'intérieur, sous l'effet par exemple de la poussée du vent.

Selon un autre aspect de l'invention, les deux montants de chaque arceau sont de longueurs égales. Alternativement, selon un autre aspect de l'invention, les deux montants de chaque arceau sont de longueurs inégales.

### Bref exposé des figures et des dessins

D'autres avantages, buts et caractéristiques de l'invention apparaîtront à la lecture de la description de formes préférées de réalisation, données à titre d'exemple non limitatif en se référant aux dessins annexés en lesquels :
- la figure 1 est une vue en perspective d'une serre mono-tunnel selon l'invention, montrant l'un des deux flancs latéraux relevé et l'autre abaissé,
- la figure 2 est une vue en perspective de l'ossature de la serre mono-tunnel selon l'invention,
- la figure 3 est une vue en perspective selon une échelle agrandie des deux arceaux avant ou arrière de l'ossature de la serre selon l'invention,

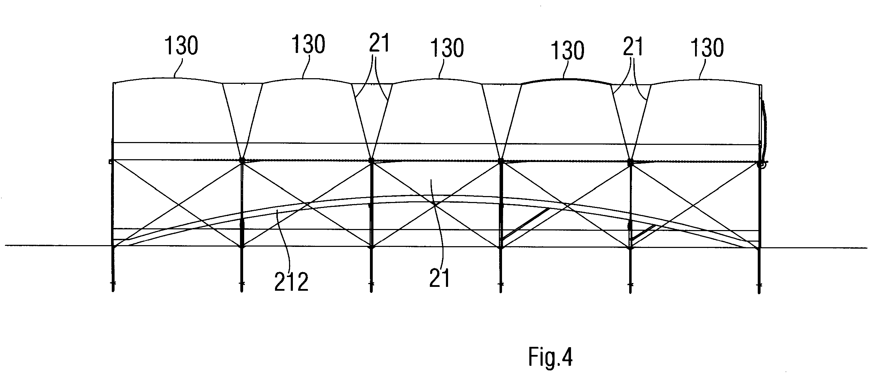

- la figure 4 est une vue de face de la serre selon l'invention,
- la figure 5 est une vue de détail de la partie supérieure de chaque pieux vertical de maintien des arceaux intermédiaires,
- la figure 6 est une vue de dessous montrant le détail de la fixation de l'entretoise sommitale à l'un des arceaux,
- la figure 7 est une vue de profil d'une entretoise latérale avec moyen d'absorption de l'humidité,
- la figure 8 est une vue de dessus d'un étrier de fixation de chaque entretoise latérale à chaque arceau, et du module externe de guidage associé,
- la figure 9 est une vue en coupe de l'étrier et du module de guidage selon la figure 8,
- la figure 10 est une vue en coupe d'une autre forme de réalisation de l'étrier de fixation, le module externe de guidage associé étant représenté sur cette figure,
- la figure 11 est une vue en plan d'un module de guidage et de maintien, les filins de maintien de la couverture et la corde de relevage étant représenté en traits mixtes forts sur cette figure,
- les figures 12 et 13 sont des vues montrant une butée effaçable, respectivement en position inactive et en position active,
- la figure 14 est une vue de détail de l'ensemble de relevage,
- la figure 15 est une vue en perspective d'une autre forme de réalisation du module externe de guidage,
- la figure 16 est une vue d'une serre asymétrique,
- les figures 17 à 20 sont des vues illustrant d'autres modes de fixation de l'entretoise sommitale à l'ossature de la serre,
- les figures 21 et 22 sont des vues de face et profil montrant une autre forme de réalisation d'un module externe de guidage,
- la figure 23 est une vue d'une ouverture d'aération associée à ensemble de relevage et d'affalement du flanc latéral correspondant à ladite ouverture,
- les figures 24 et 25 sont des vues des lisses supérieure et inférieure de l'ouverture d'aération,
- la figure 26 est une vue de profil de détail du module relais de relevage et d'affalement, de l'ensemble de relevage selon la seconde forme de réalisation.

### Meilleures manières de réaliser l'invention

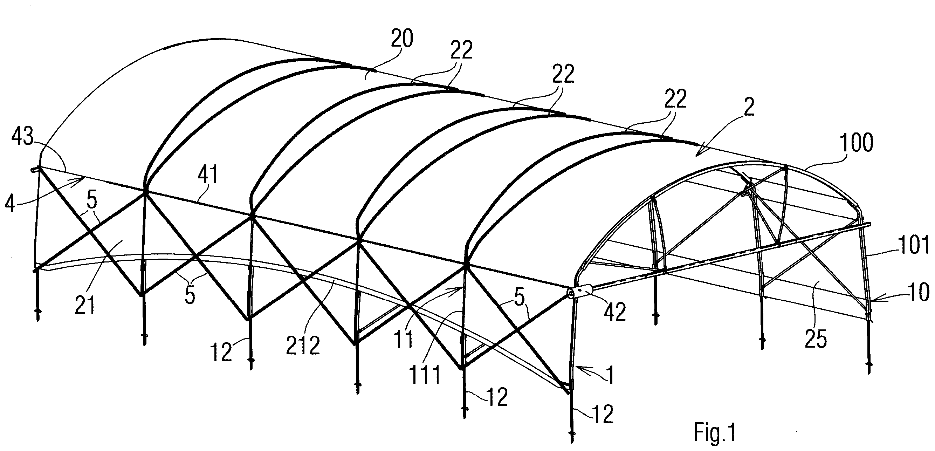

Telle que représentée notamment en figure 1, la serre selon l'invention, est prévue pour recouvrir temporairement une aire de culture et pouvoir être déplacée vers une autre aire de culture afin d'éviter tant l'épuisement du sol que son infestation par la vermine. L'aire de culture vers laquelle la serre est déplacée pourra avoir été préalablement mise au repos sur une période de plusieurs mois ou années ou avoir reçue des cultures connues en soi, aptes à régénérer les sols.

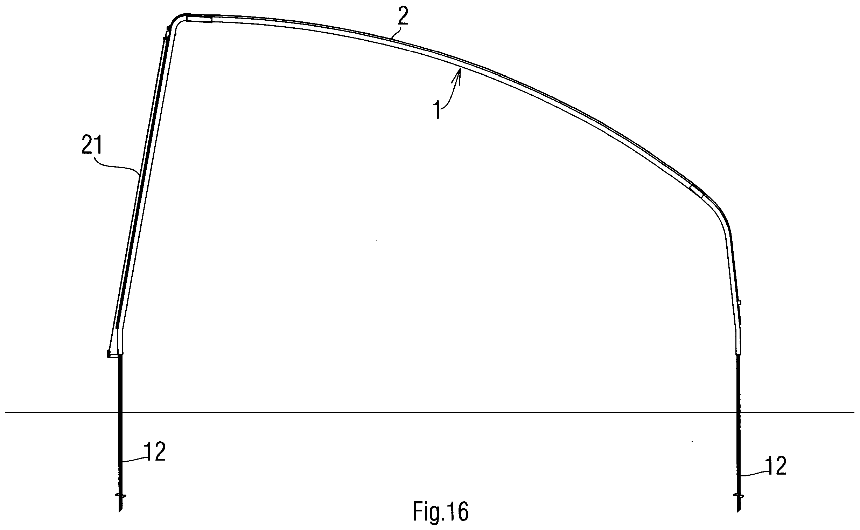

Comme connu, la serre présente deux flancs latéraux longitudinaux 21 surmontés par un dôme 20 formant toiture, les flancs latéraux 21 s'étendant depuis le dôme 20 vers le sol. En figure 1 on observe que la serre présente un plan géométrique de symétrie longitudinal, et que le dôme 20 forme une toiture à deux pentes séparées l'une de l'autre par une ligne sommitale contenue dans ledit plan géométrique longitudinal de symétrie. On observe sur cette figure que les deux pentes de toiture formées sont égales en inclinaisons et en dimensions et que les deux flancs latéraux sont de mêmes hauteurs. En figure 16 on observe une serre dite asymétrique, les deux flancs latéraux 21 étant de différentes hauteurs. Une telle serre ne présente aucun plan géométrique longitudinal de symétrie. La toiture formée par le dôme pourra ne présenter qu'une seule pente comme montré en figure 16 ou bien deux pentes inégales.

La serre quel que soit son type symétrique ou asymétrique comprend une ossature porteuse 1 et d'une couverture 2, de préférence étanche à l'eau et transparente à la lumière, montée en fixation sur l'ossature 1. Cette ossature est formée de deux arceaux tubulaires d'extrémité 10 et d'arceaux tubulaires intermédiaires 11, les dits arceaux d'extrémité 10 et intermédiaires 11 étant parallèles, équidistants et réunis les uns aux autres par au moins une entretoise 13, 14 souple.

La serre, selon l'invention, est avantageusement déplaçable et à cet effet les arceaux 10, 11 sont fixés de manière amovible à des pieux verticaux 12, préalablement enfoncés dans le sol. Ces pieux ne sont pas totalement enfoncés dans le sol afin que par leur zone supérieure 120, ils soient en débordement de quelques dizaines de centimètres au-dessus du niveau du sol et forment chacun une broche de raccordement prévue pour recevoir l'un des arceaux.

Chaque arceau 10, 11, est formé de préférence à partir d'éléments tubulaires de section droite quadrangulaire de préférence carrée. Chaque arceau présente une partie supérieure 100, 110 arquée, de préférence en arc de circonférence de cercle, assemblée à deux montants rectilignes 101, 111, latéraux dont la partie basse 101a, 111a, de chacun constitue une forme de piétement vertical prévue pour être engagée en emboîtement de forme sur un des pieux verticaux 12. La verticalité des formes de piètement 101a, 111a facilite le retrait et la mise en place des arceaux sur les broches de raccordement 120.

La partie haute de chacun des deux montants 101, 111 de chaque arceau est coudée et reçoit en emboîtement de forme la partie supérieure 100, 110. De préférence, chaque montant 101, 111 est incliné par rapport à la verticale.

De préférence, les deux arceaux avant 10 et 11 et les deux arceaux arrière 10 et 11 de l'ossature 1 de la serre, sont entretoisés par des membrures rigides 15, 17 et forment deux ensembles indépendants indéformables, aptes à encaisser les efforts de traction appliqués par la ou chaque entretoise souple 13, 14. Cette disposition évite la déformation en flexion des arceaux 10 et 11 et constitue deux zones d'ancrage, d'extrémité, indéformables, recevant en fixation la ou chaque entretoise souple. Ces deux ensembles indépendants, sont déplaçables chacun d'un seul tenant.

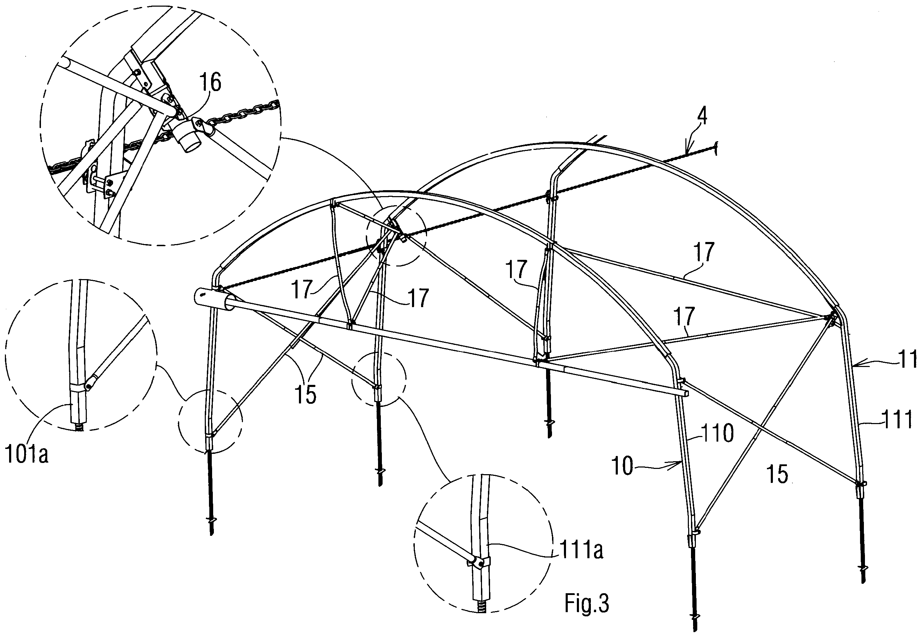

Selon une forme pratique de réalisation de chaque ensemble rigide indépendant, des membrures 15 sont disposées en croix d'un arceau 10, 11 à l'autre et plus particulièrement entre les montants de ces arceaux. Comme on peut le voir plus particulièrement en figure 3 chaque montant 111 de l'arceau 11 des deux arceaux avant et arrière est équipé en partie supérieure d'un corps d'assemblage 16 sous forme de mandrin auquel est fixée, par l'entremise d'un collier, l'extrémité supérieure de l'une des membrures en croix 15. De plus à ce corps d'assemblage 16 est fixée une structure triangulaire rigide formée par l'assemblage de trois membrures 17. Cette structure triangulaire, par l'un de ses sommets, est fixée au corps d'assemblage 16 par l'entremise de colliers et, par la membrure 17 opposée à ce sommet, à la partie supérieure 100 de l'arceau 10 ainsi qu'à une lisse horizontale 100a fixée à cette partie supérieure. On remarque que la membrure 17 par laquelle chaque structure triangulaire est fixée à la partie supérieure 100 est verticale. On comprend donc que chaque ensemble rigide indépendant, comporte deux corps d'assemblage, deux paires de membrures 16 en croix et deux structures triangulaires toutes deux fixées d'une part à la partie supérieure 100 de l'arceau 10 et d'autre part à la lisse horizontale 100a, cette dernière étant commune aux deux structures triangulaires.

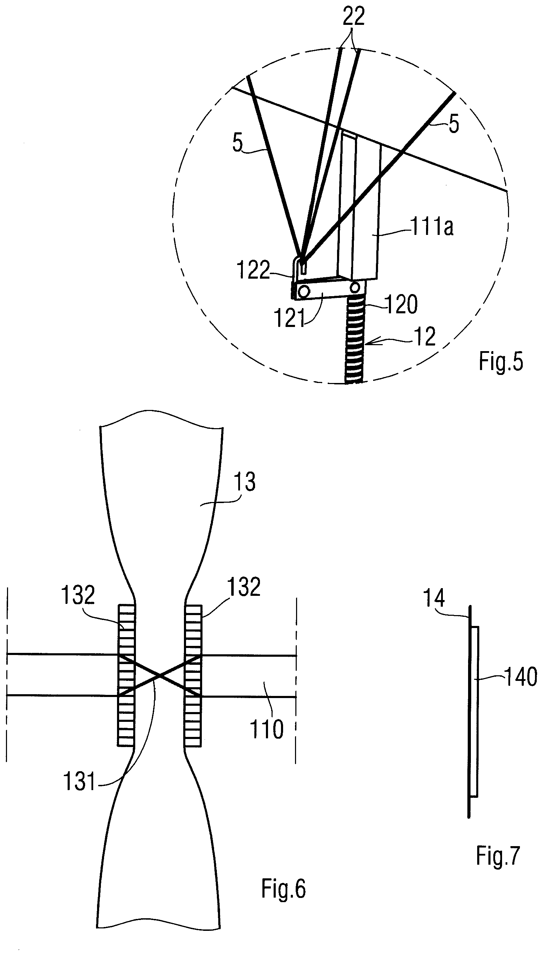

La couverture 2, par appui sur la partie supérieure 100, 110 de chaque arceau 10, 11, forme le dôme 20 longitudinal et par appui sur les montants 101, 111, forme les deux flancs latéraux longitudinaux 21. Cette couverture 2 est maintenue sur les deux arceaux d'extrémité 10 par des organes de pinces et sur les arceaux intermédiaires 11 par des filins 22 installés sur elle et disposés en tension deux à deux de part et d'autre de chaque arceau intermédiaire 11. Ces filins sont fixés aux broches de raccordement 120 et plus particulièrement à des pattes 121 fixées à ces broches (Fig 5). De manière plus précise, chaque broche de raccordement 120 reçoit en fixation une patte horizontale 121 s'étendant vers l'extérieur de la serre, cette patte 121, à distance de la broche 120 portant un anneau 122 auquel sont fixés les deux filins 22 associés à l'arceau intermédiaire 11 correspondant. Grâce à cette disposition, les filins 22 sont maintenus à distance du ou des flancs latéraux pour des raisons qui seront exposées plus loin.

Conformément à l'invention, l'une au moins des entretoises 13, 14 est formée par un élément souple fixé aux différents arceaux 10, 11, et est disposée en tension entre ces derniers. Ces entretoises 13, 14 sont recouvertes par la couverture 2. La ou chaque entretoise souple 13, 14 est prévue pour être jeté après usage, avec la couverture 2, lors du déplacement de l'ossature de la serre vers une autre aire de culture.

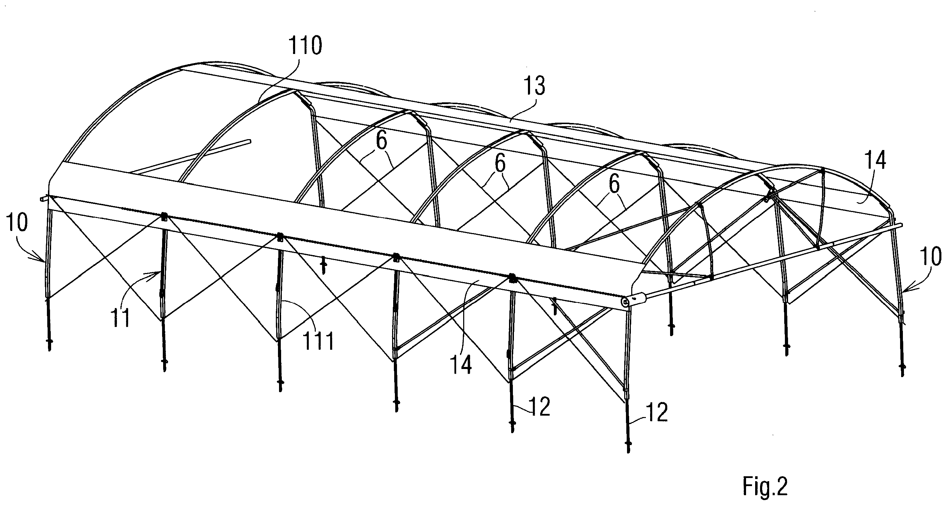

Comme on peut le voir plus particulièrement sur la figure 2, l'une des entretoises souple 13 occupe une position sommitale tandis qu'au moins une autre entretoise souple 14 occupe une position latérale le long de la partie supérieure de l'un des flancs latéraux 21 de la serre. De préférence, la ou chaque entretoise latérale 14 recouvre d'une part les coudes que forment les montants rectilignes 101, 111 du flanc latéral 21 correspondant et, d'autre part, les zones de jonction de ces montants avec les parties supérieure 100, 110 des arceaux 10, 11.

Dans la forme de réalisation objet des figures 1 et 2, l'entretoise sommitale 13 occupe une position centrale, la serre selon cette forme de réalisation présente deux entretoises latérales 14. Dans la forme de réalisation objet de la figure 16 l'entretoise sommitale se situe immédiatement au-dessus du flanc latéral de plus grande hauteur et la serre selon cette forme de réalisation ne possède qu'une entretoise latérale 14 disposée au-dessus de la partie supérieure du flanc de plus faible hauteur.

Ces entretoises 13, 14, en plus de leur fonction de maintien de l'écartement entre les arceaux 10, 11 constituent des éléments de protection interposés entre la couverture 2 et lesdits arceaux 10, 11. Elles diminuent ainsi le risque d'endommagement de la couverture contre les arceaux.

Avantageusement, au moins l'entretoise sommitale 13 est formée par une gaine gonflable. Par gonflement de cette gaine 13, la couverture 2 est écartée de la zone sommitale de chaque arceau intermédiaire 11. De plus, par gonflement, l'entretoise sommitale 13 forme des renflements 130 entre les arceaux, formant saillie vers le haut. Ces renflements forment des coussins d'amortissement aptes à absorber les chocs sur la couverture 2 dus par exemple à la grêle, aux fortes pluies ou aux rafales du vent.

Dans une forme pratique de réalisation, la chambre interne de la gaine gonflable est connectée par une conduite à une source d'air sous pression, préférentiellement constituée par un ou plusieurs ventilateurs.

L'entretoise sommitale gonflable 13 est fixée à chaque arceau intermédiaire 11 et plus particulièrement à la zone supérieure 110 de chacun de ces arceaux 11 par un lien élastique 131 (Fig 6). Ce lien élastique 131 est suffisamment serré pour maintenir l'entretoise en place sur l'arceau. Cependant, le serrage du lien n'est pas suffisamment prononcé pour s'opposer au gonflement de l'entretoise sur toute sa longueur. A ce lien élastique 131 pourront être associés deux éléments longiformes annelés 132, disposés latéralement à l'entretoise 13, contre et parallèlement à ladite entretoise et ce entre cette dernière et le lien élastique 131. Ces éléments longiformes 132, grâce aux formes d'anneaux qu'ils présentent en surface externe, sont axialement retenus par le lien élastique 131 et s'opposent au déplacement axial de l'entretoise 13.

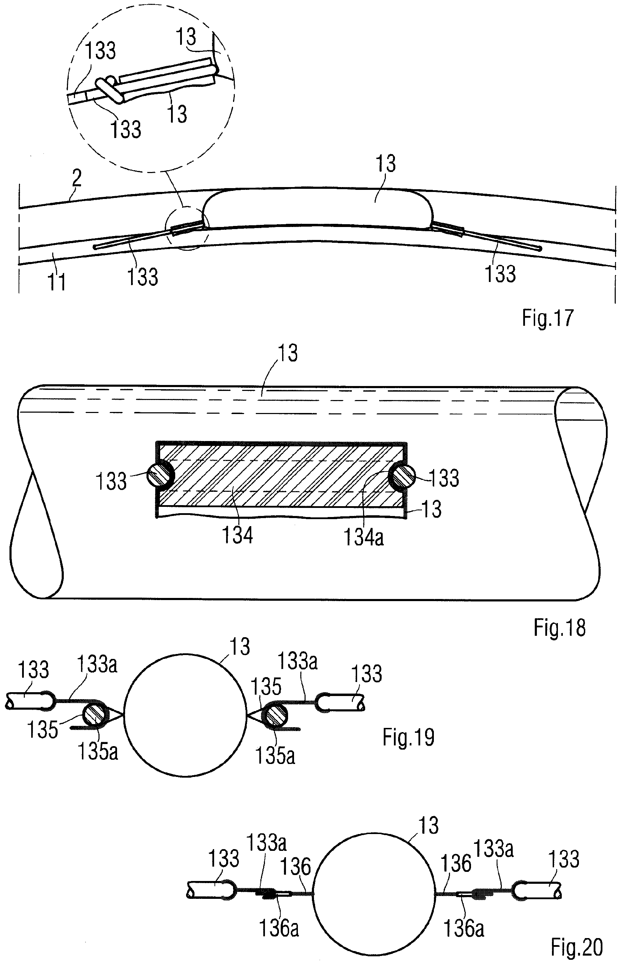

En figure 17 est représentée une autre forme de réalisation des moyens de fixation à l'ossature de la serre, de l'entretoise sommitale gonflable 13. Ces moyens de fixation se développent de part et d'autre de l'entretoise sommitale 13 et solidarisent cette dernière aux arceaux 11.

Chaque moyen de fixation est constitué d'au moins un lien élastique 133 et d'au moins une interface de liaison mécanique, fixée à l'entretoise 13 et recevant en fixation au moins un lien élastique 133, lequel est fixé à l'arceau 11 correspondant de l'ossature 1 de la serre.

Selon une première forme de réalisation, telle que représentée en coupe en figure 18, l'interface de chaque moyen de fixation est constituée par un disque 134 doté d'une gorge 134a dans laquelle est engagée en fixation une partie de la paroi de l'entretoise 13. Cette paroi est maintenue fermement dans la gorge 134a par un anneau élastique lié au lien élastique 133. Préférentiellement, cet anneau élastique est constitué par une boucle formée en extrémité du lien 133 et comportant un noeud coulant.

Selon une autre forme de réalisation, telle que représentée en figure 19, le moyen de fixation comporte deux interfaces de liaison 135, fixées à l'entretoise souple 13 de manière diamétralement opposée. Ces interfaces sont formées par deux ourlets latéraux, dans chacun desquels est engagé un cordon souple 135a formant une zone d'ancrage à des crochets 133a portés par les liens élastiques 133. Les ourlets latéraux sont intégrés à l'entretoise 13 et sont isolés pneumatiquement du volume interne de cette entretoise par des lignes continues de séparation, par exemple sous forme de lignes de soudure continues.

Selon une autre forme de réalisation, telle que représentée en figure 20, le moyen de fixation comporte, comme précédemment, deux interfaces de liaison 136, fixées à l'entretoise 13 de manière diamétralement opposées. Ces interfaces sont formées par deux ourlets latéraux, et par des oeillets d'ancrage 136a fixés à ces ourlets. Ces oeillets forment des zones d'ancrage à des crochets 133a portés par les liens élastiques 133. Comme précédemment, les deux ourlets sont intégrés à l'entretoise souple gonflable 13 et sont isolés pneumatiquement du volume interne de cette entretoise par des lignes continues de séparation, formées par exemple, par des lignes de soudure continues.

La ou chaque entretoise latérale 14 est de préférence non gonflable, mais alternativement, la ou chaque entretoise latérale pourra être constituée par une gaine gonflable.

Afin de réguler le degré d'humidité dans la serre, l'une au moins entretoise latérale 14 est constituée en un matériau, connu en soi, apte à absorber l'humidité du volume interne de la serre à la restituer. Ainsi un excès d'humidité dans le volume interne pourra être absorbé. De même, lorsque le degré d'humidité dans le volume de la serre sera trop faible, ce matériau sera apte à restituer l'humidité emmagasinée.

En variante (Fig. 7), la ou chaque entretoise latérale 14 reçoit un matériau 140 apte à absorber l'humidité et à la restituer. Une telle disposition est notamment applicable à des entretoises latérales gonflables et éventuellement à l'entretoise sommitale 13.

De préférence, la ou chaque entretoise latérale 14 est fixée à chaque arceau d'extrémité par des organes de pince, connus en soi, et à chaque arceaux intermédiaires 11 par un étrier 3 engagé sur le dit arceau et plus précisément sur le montant 111 correspondant.

Selon une forme pratique de réalisation, cet étrier 3 comprend :
- au moins une mâchoire de serrage 30, plane,
- deux goujons filetés 31 fixés par leur extrémité distale à la mâchoire de serrage 30,
- une bride arrière de serrage 32 engagée librement sur les goujons filetés et,
- des écrous de serrage 33 engagés sur les goujons filetés 31, en arrière de la bride 32, ces dits écrous étant prévus pour venir en serrage contre la bride de serrage 32.

La mâchoire de serrage comporte deux grandes faces planes opposées dont une, la face arrière, est tournée vers l'arceau correspondant et l'autre, la face avant, est tournée vers l'extérieur du volume de la serre. Chaque goujon, par sa zone distale, est engagé dans un perçage traversant pratiqué dans la mâchoire de serrage 30 et vient par son extrémité distale à fleur de la grande face avant de ladite mâchoire 30.

La mâchoire de serrage 30 est prévue pour être positionnée, par sa face arrière, en regard de la face avant du montant 111, cette face avant étant celle externe au volume de la serre. La bride de serrage 32 est prévue pour être amenée en pression contre la face arrière du montant 111, cette face arrière étant celle interne au volume de la serre. En vue de sa fixation aux arceaux intermédiaires 11, l'entretoise latérale 14 est pourvue de perçages traversants de passage des goujons 31 et est enserrée entre la face avant du montant 111 et la mâchoire de serrage 30 et plus particulièrement, la face plane arrière de cette dernière. Cette face plane arrière est celle située en regard de la face avant du montant. Une telle disposition convient à une entretoise 14 non gonflable.

Pour la fixation d'une entretoise latérale gonflable 14, sont prévues deux mâchoires de serrage 30, 30a entre lesquelles est enserrée ladite entretoise 14. Selon cette forme de réalisation, la mâchoire de serrage 30a, plane, est dotée de deux perçages traversants par lesquels elle est engagée librement sur les goujons 31, entre la mâchoire 30 et la bride de serrage 32. Cette entretoise gonflable 14 est toujours pourvue de deux perçages traversants dans lesquels sont engagés les deux goujons 31. Par serrage des écrous 13, associés à ces goujons 31, la bride 32 est appliquée contre la face arrière du montant 111. De manière concomitante, la face arrière de mâchoire 30a est appliquée contre la face avant du montant 111 et la mâchoire 30 est ramenée contre la gaine 14, cette dernière se trouvant alors enserrée fermement entre la face avant de la mâchoire 30a et la face arrière de la mâchoire 30 ce qui assure tant son maintien en position que son étanchéité au niveau de ses perçages.

Avantageusement, l'un au moins des deux flancs latéraux 21 que forme la couverture, est agencé de manière déplaçable en hauteur pour occuper soit une position de dégagement d'une ouverture latérale d'aération soit une position d'occlusion de cette ouverture.

Selon une première forme de réalisation, ledit flanc latéral 21 est relevable afin de dégager une ouverture d'aération et ce dit flanc n'est fixé à l'ossature de la serre que par les deux extrémités de sa bordure inférieure. Plus précisément, ce flanc 21 par les extrémités de sa bordure inférieure est fixé à la partie inférieure du montant correspondant 101 de chaque arceau d'extrémité 10 et est simplement apposé, sans y être fixé, contre les montants correspondants 111 des arceaux intermédiaires 11. Ainsi cette bordure inférieure, hormis ses extrémités, peut glisser en hauteur le long des dits montants 111.

De préférence, la bordure inférieure d'au moins le flanc latéral relevable 21 reçoit sur tout son long un bourrelet longitudinal 210 élastiquement déformable tant axialement que radialement, ledit bourrelet 210, par ses deux extrémités, étant fixé rigidement à la partie inférieure des deux arceaux d'extrémité 10. Ce bourrelet 210 est avantageusement mis en tension entre les deux arceaux 10 d'extrémité. La partie de couverture, formant le pan latéral correspondant, est fixée par des agrafes audit bourrelet 210. Le bourrelet élastique 210 a pour effet, notamment, de solliciter le pan latéral correspondant vers sa position d'occlusion de l'ouverture d'aération.

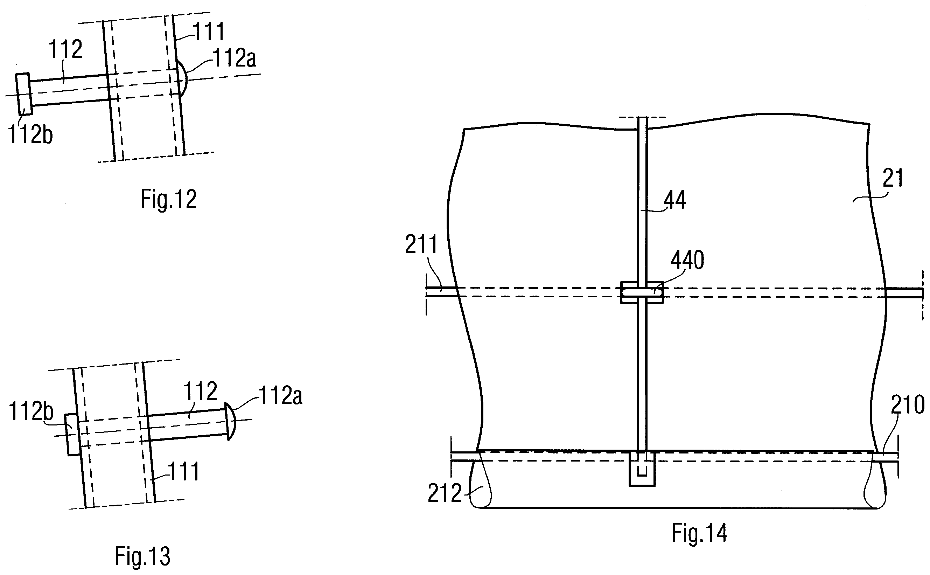

Selon une première forme de réalisation, le relevage du ou de chaque flanc latéral relevable 21 est opéré de manière manuelle et le montant correspondant 111 de chaque arceau intermédiaire 11 est équipé d'une butée effaçable 112, apte à maintenir ledit flanc latéral dans un état replié, au-dessus du sol (Figs 12, 13), lorsqu'elle est en position active. Dans cette position active, la butée 112 supporte le flanc latéral 21. Une telle disposition a pour but de maintenir dégagée l'ouverture d'aération.

Selon une forme pratique de réalisation, la butée effaçable 112 est formée par un axe engagé en coulissement dans deux perçages axialement alignés, pratiqués dans les parois arrière et avant du montant 111 correspondant. Cette butée comprend une tête avant 112a, sous forme de renflement et un talon arrière 112b formé par exemple par un écrou engagé en vissage sur un filetage pratiqué dans la zone arrière de l'axe constitutif de la butée 112. En position active, la butée 112 forme saillie par rapport à la face avant du montant 111. Dans cette position, la tête avant 112a est écartée de la face avant du montant 111 tandis que le talon 112b est appliqué contre la face arrière de ce montant. En position effacée, la butée 112 forme saillie dans le volume de la serre. Dans cette position, la tête 112a est appliquée contre la face avant du montant 111 tandis que le talon 112b est écarté de la face arrière de ce montant.

Alternativement, le relevage du ou de chaque flanc latéral relevable 21 est mécanisé et ledit flanc 21 est assujetti à un ensemble de relevage 4 externe, à commande centralisée, par action duquel, la bordure inférieure dudit flanc est écartée du sol afin de dégager l'ouverture d'aération ou bien est ramenée en appui sur le sol afin d'obturer ladite ouverture d'aération.

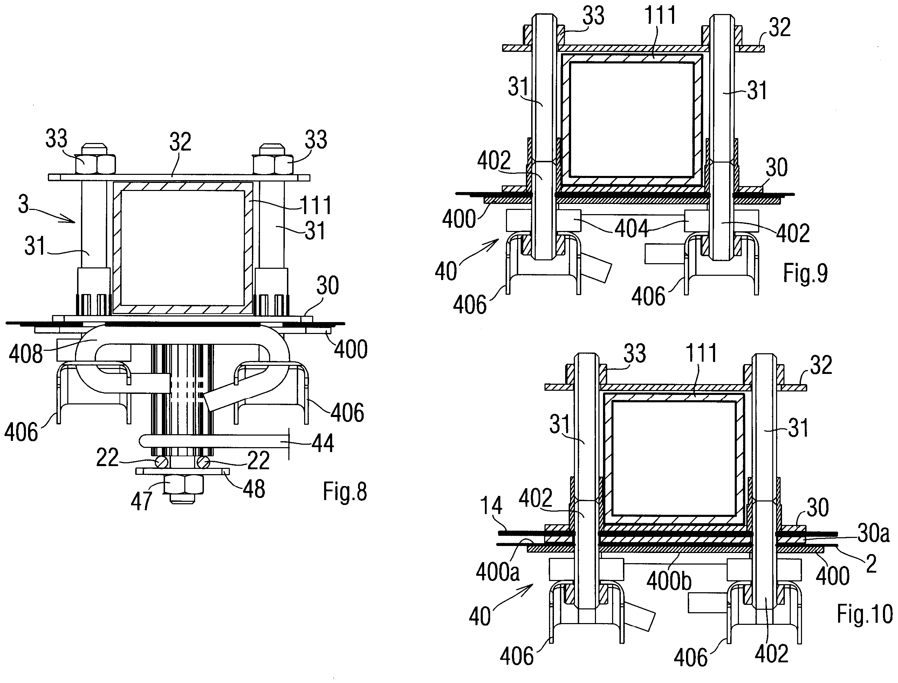

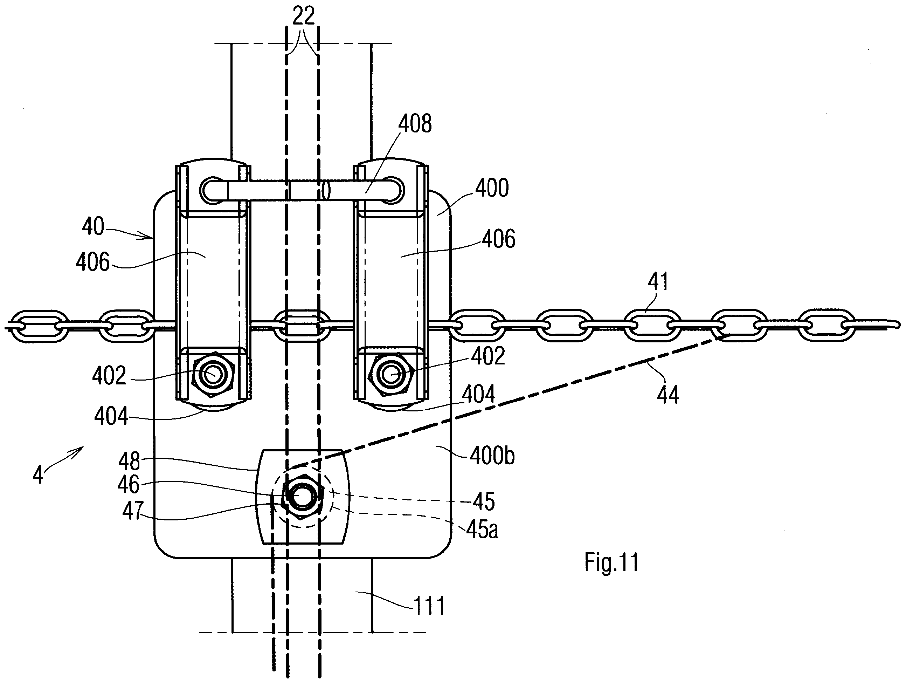

Comme on peut l'observer notamment en figures 8 à 11 l'ensemble de relevage 4 comprend :
- au moins un module externe de guidage et de maintien 40 occupant une position fixe par rapport aux arceaux et ce au-dessus du flanc latéral relevable 21 correspondant que forme la couverture 2, ledit module externe comportant au moins un chemin de guidage,
- un organe de commande horizontal 41 engagé et guidé dans le chemin de guidage que comporte le module externe 40, ledit organe de commande 41 étant assujetti d'une part à un moyen de traction 42 et d'autre part à un organe de rappel 43,
- au moins une corde de relevage 44 fixée d'une part à la bordure inférieure dudit flanc latéral 21, et d'autre part au dit organe de commande, ladite corde de relevage 44, entre la bordure inférieure du flanc latéral 21 et l'organe de commande 41 coopérant en enroulement partiel avec une pièce d'enroulement partiel 45 fixée au module externe de guidage 40, le point de fixation de la corde de relevage 44 à la bordure inférieure du flanc latéral 21 étant situé à l'aplomb de la pièce d'enroulement partiel 45.

En vue du relevage du flanc latéral 21, le moyen de traction est actionné dans le sens adéquat, ce qui a pour effet d'appliquer un effort de traction axial sur l'organe de commande 41 sous l'effet duquel ce dernier est déplacé en translation en étant guidé par le module externe de guidage 40, ce déplacement s'effectuant à rencontre de l'action exercée par l'organe de rappel 43. Du fait de son déplacement, l'organe de commande 41 entraîne la corde de relevage 44 laquelle alors entraîne vers le haut la bordure inférieure du flanc latéral 21. Le bourrelet élastique 210 s'allonge alors élastiquement de sorte que sa tension interne s'en trouve augmentée. Le flanc latéral 21 par sa bordure inférieure est ainsi écarté du sol afin de découvrir l'ouverture d'aération. Par manoeuvre inverse du moyen de traction 42, l'organe de commande 41 est déplacé en sens inverse sous l'effet de l'action de l'organe de rappel 43 et le flanc latéral 21, sous l'effet tant de son propre poids que de l'action du bourrelet élastique 210, rejoint sa position initiale d'occlusion de l'ouverture d'aération.

Le moyen de traction 42 est par exemple formé par un treuil débrayable d'un type connu. Le débrayage du treuil, lorsque le ou chaque flanc latéral 21 est relevé, à pour conséquence de relâcher brusquement la tension de la chaîne 41. Cette dernière se trouve alors mue en arrière sous l'effet de l'action de l'organe élastique de rappel 43. La ou chaque corde de relevage 44 se trouve alors relâchée et le flanc relevable 21 peut alors revenir rapidement en position d'obturation de l'ouverture d'aération.

Les deux treuils 42 que comporte la serre, dans la mesure où cette dernière est dotée de deux pans relevables, pourront être accouplés l'un à l'autre, par un même arbre de transmission lui-même accouplé à l'arbre de sortie rotatif d'un organe moteur constituant un élément de commande centralisée. Ainsi les deux flancs latéraux 21 seront relevés ou abaissés simultanément. Lorsque plusieurs serres seront accolées les unes aux autres par leurs flancs latéraux, les différents treuils seront accouplés à une même ligne de transmission formée par des arbres de transmission axialement alignés, chaque arbre de transmission étant accouplé à deux treuils consécutifs. Cette ligne de transmission sera accouplée à un organe moteur connu en soi.

Dans les deux configurations qui viennent d'être décrites, les flancs latéraux 21 des différentes serres sont simultanément actionnés par activation d'un même organe moteur. Alternativement, pourront être utilisées deux lignes de commande, dont une sera affectée à l'actionnement des flancs latéraux gauche des différentes serres et dont l'autre sera affectée à l'actionnement des flancs latéraux droite de ces serres.

Selon une forme pratique de réalisation, l'organe de commande 41 est formé par une chaîne du type marine. Une telle chaîne, formée par des anneaux liés les uns aux autres par pénétrations mutuelles, présente l'avantage d'offrir un large choix de points de fixation du ou de chaque corde de relevage 44, ces points de fixation étant constitués par les anneaux de la chaîne.

L'organe de rappel 43 est de préférence formé par un câble élastiquement expansible du type de ceux connus sous le nom commercial de « Sandow ». Alternativement, cet organe de rappel peut être formé par un ressort à spires ou bien encore par un système de contre poids.

Afin de faciliter le relevage et l'abaissement du ou de chaque flanc relevable 21, les filins 22 sont maintenus à distance du ou de ces derniers. À cet effet, chaque patte 121 présente une longueur d'une dizaine de centimètre ou plus.

Le module externe de guidage 40 est disposé en regard du ou de l'un étrier de fixation 3 et est fixé à ce dernier au travers de la couverture 2.

Avantageusement, chaque montant 111 correspondant au flanc latéral relevable 21 est équipé d'un support de fixation auquel est fixé, au travers de la couverture 2, un module externe de guidage 40 avec lequel coopère une corde de relevage 44 dédiée. Dans cette configuration, l'organe de commande horizontal 41 est commun aux différents modules de guidage 40.

Le support de fixation est avantageusement constitué d'un étrier. Cet étrier est engagé sur le montant 111 correspondant. Cet étrier comprend une mâchoire de serrage, plane, deux goujons filetés latéraux fixés par leur extrémité distale à la mâchoire de serrage, une bride arrière de serrage, engagée librement sur les goujons filetés et des écrous de serrage engagés sur les goujons filetés, en arrière de la bride de serrage, ces dits écrous étant prévus pour venir en serrage contre ladite bride. La mâchoire de serrage est positionnée en regard de la face avant du montant 111, cette face avant étant celle tournée vers l'extérieur du volume de la serre. Les goujons filetés, par leur extrémité distale, affleurent la face avant de la mâchoire de serrage. Un tel support de fixation peut être indépendant du ou de chaque étrier de fixation 3 de la ou de chaque entretoise latérale 14, mais avantageusement, ce ou chaque support de fixation est constitué par un étrier 3. Ainsi le ou chaque étrier 3 rempli deux fonctions, une fonction de fixation de l'entretoise correspondante et une fonction de fixation de module de guidage correspondant.

Selon une forme pratique de réalisation, le module externe de guidage 40 comprend une platine 400 plane comportant deux grandes face opposées 400a, 400b, dont une 400a est tournée vers l'étrier de fixation 3 et dont l'autre 400b est tournée vers l'extérieur. Cette platine 400 porte au moins un axe 402, s'étendant vers l'extérieur de la serre depuis la grande face 400b. Sur cet axe, est enfilée la bague interne d'un roulement à billes 404 et est fixé un élément latéral de rétention 406, arqué, sans angle vif, s'étendant vers le haut, définissant avec la bague externe du roulement à billes 404, un chemin de guidage accueillant en guidage, l'organe de commande horizontal 41. Comme on le comprend, le roulement à billes 404 se trouve enserré entre l'élément arqué 406 et la face plane 400b de la platine 400. En vue de la fixation de l'élément de rétention 406, l'extrémité distale de l'axe 402, c'est-à-dire l'extrémité la plus éloignée de l'arceau 11 auquel est fixé le module 40, est filetée et reçoit un écrou de blocage.

De préférence, sont prévus deux axes 402, deux roulements 404 et deux éléments latéraux de rétention 406 comme représenté en figures 8 à 11, ces différents éléments définissant tous deux un même chemin de guidage de l'organe de commande horizontal 41. On peut voir sur ces figures que les deux éléments de rétention arqués 406, à distance des roulements 404, sont joints l'un à l'autre par un anneau ouvert 408. Cet anneau ouvert 408 est engagé dans des perçages traversants pratiqués en extrémité haute des éléments arqués 406 et reçoit les deux filins de maintien 22 associé à l'arceau 11 correspondant.

Sous et à distance du chemin de guidage formé, au droit de l'intervalle entre les deux roulements 404, la platine 400 reçoit en fixation une pièce d'enroulement partiel 45, de forme cylindrique, comportant la surface courbe d'enroulement 45a sur laquelle glisse la corde de relevage 44. Cette pièce d'enroulement 45 est engagée sur un goujon 46 fixé par une de ses extrémités à la platine 400. Ce goujon 46t s'étend vers l'extérieur depuis la grande face 400b de la platine 400.

Afin de maintenir la pièce d'enroulement en fixation par rapport à la platine, le goujon 46 est fileté en extrémité libre pour recevoir un écrou de blocage 47. Une rondelle d'immobilisation 48 est engagée sur le goujon 46 et est interposée entre la pièce d'enroulement partiel 45 et l'écrou de blocage 47.

De préférence, la valeur de l'entraxe entre les axes 402 est égale à la valeur de l'entraxe entre les goujons 31 et la zone proximale de chaque axe 402 est filetée tandis que la zone distale de chaque goujon 31 est axialement taraudée. En vue de la fixation de chaque module externe de guidage 40 à son étrier 3 (Figures 9, 10), chaque axe 402 est d'abord engagé par sa zone proximale, dans un perçage traversant pratiqué dans la platine 400. Ensuite, cet axe 402 est engagé en vissage dans le taraudage axial que comporte le goujon 31 avec lequel il est axialement aligné. Dans cette configuration, chaque axe 402 est engagé dans un perçage traversant pratiqué dans la couverture 2, cette dernière se trouvant alors enserrée entre la platine 400 et la face avant de la mâchoire de serrage 30.

De préférence, la zone distale de chaque goujon 31 est formée par un douille taraudée, fixée à la mâchoire de serrage 30, le taraudage de la douille étant prévu pour accueillir en vissage la zone proximale de l'axe 402 correspondant.

De manière favorable, les filins de maintien 22 sont engagés entre la rondelle 48 et la pièce d'enroulement 45 et sont enserrés entre ces deux éléments. Ainsi, en cas de détérioration de la fixation des filins 22 à leurs pattes 121, ces derniers seront toujours maintenus en place par les modules externes de guidage 4, sur la forme de dôme 20 que forme la couverture 2.

Chaque corde de relevage 44, entre le module 40 et son point de fixation à la bordure inférieure du flanc 21 associé est engagée dans au moins un anneau de relevage 440 fixé au dit flanc 21 à distance de sa bordure inférieure. De cette manière, le relevage du flanc latéral 21 s'accompagne d'un pliage plus conséquent de ce dernier, ce qui accroit la taille de l'ouverture d'aération. Avantageusement, l'anneau de relevage 440 est agencé en pince et est fixé par pincement au flanc latéral 21. Avantageusement, l'anneau de relevage 440, par pincement, enroule partiellement le flanc latéral 21 autour d'un bourrelet horizontal longitudinal 211 élastiquement extensible et compressible, tendu entre les deux arceaux d'extrémité 10.

Avantageusement, la zone inférieure horizontale de chaque flanc latéral 21 est maintenue relevée vers l'extérieur par la ou chaque corde de relevage 44 afin de former une goulotte 212 de recueil et d'évacuation de l'eau de pluie. Par ajustement de la longueur des cordes de relevage 44 il est possible de donner une pente à chaque goulotte 212 afin de faciliter l'évacuation de l'eau vers l'une des extrémités de la serre. Afin que la goulotte puisse s'ouvrir si le poids qu'elle supporte est trop important, la ou chaque corde de relevage 44 est élastiquement déformable au moins dans le sens de sa longueur.

Avantageusement, un élément de conformation longiforme est introduit dans la goulotte 212. Cet élément a pour but de maintenir cette goulotte ouverte afin de mieux recueillir l'eau de pluie.
Selon une forme pratique de réalisation, cet élément de conformation occupe toute la longueur de la goulotte et est formé par un fil métallique, ou autre matériau, agencé en spires non jointives, de mêmes diamètres.

Afin que le volume interne de la serre ne soit colonisé par les insectes prédateurs, un filet anti-insecte 25, perméable à l'air, est fixé à la ou à chaque entretoise latérale 140, ce filet anti-insecte s'étendant depuis ladite entretoise jusqu'au sol le long des arceaux 10, 11 auxquels il est fixé de manière étanche. Ce filet anti-insecte 25, s'oppose, lorsque le flanc latéral correspondant 21 est relevé, à l'introduction dans la serre des insectes et autres prédateurs.

À chaque flanc latéral 21 que forme la couverture 2 de la serre sont associés des cordages de maintien 5 inextensibles, externes au volume de la serre. Ces cordages 5 sont disposés de manière croisée entre chaque arceau 10, 11 et sont fixés l'un à l'autre par des brides au niveau de leurs points de croisement. De préférence, chaque cordage, en considérant deux arceaux successifs est fixé à la patte 121 de l'un de ces arceaux et plus précisément à l'anneau 122 porté par cette patte et au module de guidage 4 associé à l'autre arceau. Plus précisément, au niveau du module de guidage 4, le cordage 5 de maintien est enserré entre la rondelle 48 et la pièce d'enroulement partiel 45.

Des cordages inextensibles 6 de maintien sont de préférence installés à l'intérieur du volume de la serre, en fixation sur les montants 101 et 111 des arceaux. Comme précédemment, ces cordages sont disposés de manière croisée et sont fixés les uns aux autres au niveau de leurs points de croisement. Ces cordages ont pour effet de renforcer l'entretoisement des arceaux et de limiter le mouvement des flancs latéraux 21 vers l'intérieur du volume de la serre, sous l'effet de l'action du vent.

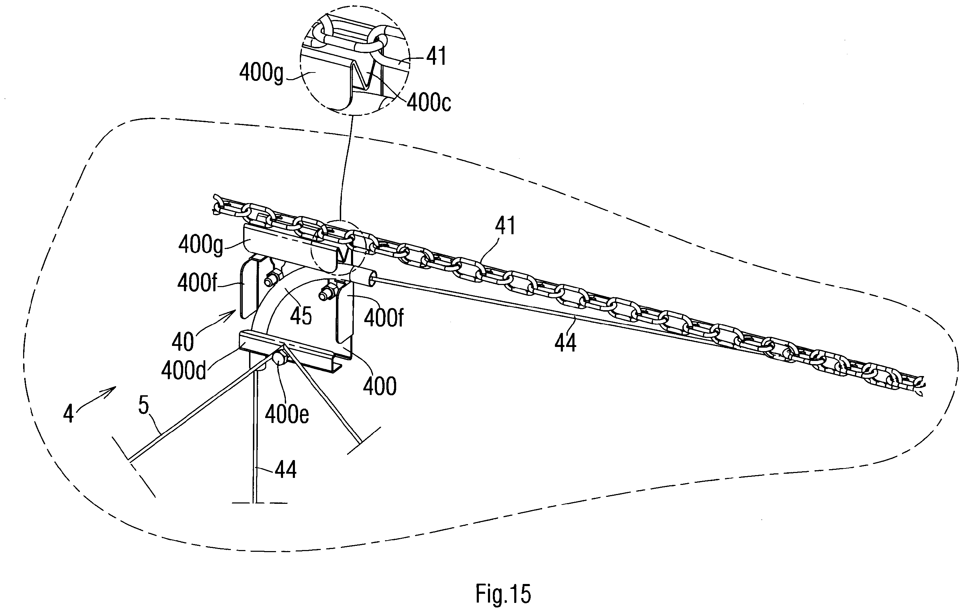

En figure 15 est représenté un module externe de guidage 40 selon une autre forme de réalisation. Le chemin de guidage de l'organe de commande horizontal 41 n'est plus formé par des roulements 404 et des éléments de rétention 406, mais par une gorge 400c de guidage, de section droite en Vé, formée par pliage de la partie supérieure de la platine 400. On remarque également que la partie supérieure de ce module comporte un retour vertical 400g orienté vers le bas et que ce module de guidage comporte deux flancs latéraux 400f, verticaux, formés par pliage de la platine 400, à angle droit, vers l'extérieur. La partie inférieure de la platine 400 est également pliée et comporte une aile verticale 400d à laquelle est fixée une vis 400e avec rondelle d'attache du cordage externe 5 de maintien.

Selon cette forme de réalisation, la pièce d'enroulement partiel 45 est formée par un tube coudé fixé à la platine 400. Ce module externe est fixé à son étrier 3 par deux vis engagées d'abord dans des perçages traversants de la platine 400 et ensuite, dans les taraudages axiaux que présentent les goujons 31.

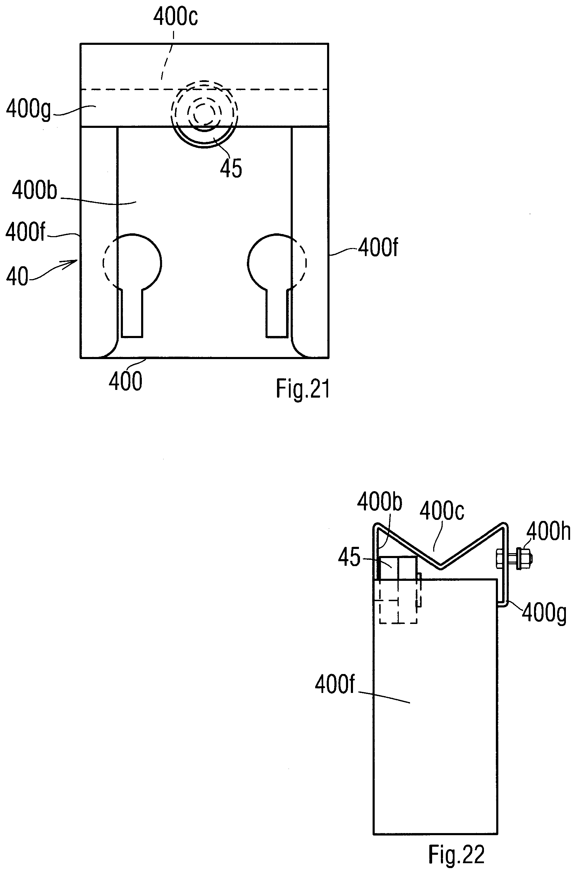

Alternativement, la pièce d'enroulement partiel est formée par la bague externe d'au moins un roulement à billes, comme on peut le voir en figures 21 et 22, lesquelles illustrent une variante de réalisation d'un module de relevage 40.

On observe sur ces figures que la pièce d'enroulement partiel 45 est formée par deux roulements à billes montés par leur bague intérieure, sur un axe commun, fixé à la platine 400. On observe sur ces figures que la partie supérieure de ce module comporte toujours une gorge 400c de guidage de l'organe de commande 41, cette gorge 400c de section droite en Vé étant formée par pliage, vers l'extérieur, de la partie supérieure de la platine 400. On observe également que ce module 40 comporte toujours un retour vertical 400g orienté vers le bas, formé dans sa partie supérieure et deux flancs latéraux 400f, verticaux, formés par pliage à angle droit, vers l'extérieur, de la platine 400. Selon cette forme de réalisation, le module 40 ne comporte plus de partie inférieure pliée.

Selon cette forme de réalisation, la pièce d'enroulement partiel 45 est logée sous la gorge en Vé et entre les flancs latéraux 400f. Le lien de relevage 44 pénètre dans le volume interne du module 40 par passage au travers de l'intervalle situé entre la gorge 400c et la rive supérieure horizontale du flanc latéral correspondant 400f et s'enroule partiellement autour de la bague extérieure du roulement 45. Plus précisément, la face intrados de la gorge 400c détermine deux logements de forme triangulaire, à savoir un logement arrière limité par la grande face 400b de la platine 400 et un logement avant. La pièce d'enroulement partiel 45 est montée dans le logement arrière. Ce logement arrière, en combinaison avec la pièce d'enroulement partiel 45, détermine un espace de confinement dans lequel évolue le lien de relevage 44 ce qui assure le maintien dudit lien sur la dite pièce 45. Le retour 400g reçoit un boulon 400h avec rondelle, (non représentés en figure 21) pour la fixation de deux filins de maintien 22.

Selon une autre forme de réalisation, l'ouverture d'aération ou chaque ouverture d'aération, est formée entre une lisse supérieure horizontale 18 et une lisse inférieure horizontale 19. La lisse supérieure horizontale est installée fixement par rapport aux arceaux 10, 11 et la lisse inférieure horizontale 19 est fixée par des étriers à ces arceaux 10, 11 et plus particulièrement aux montants correspondants 101, 111.

L'ouverture d'aération est dégagée par affalement du flanc latéral 21 correspondant et est obturée par relevage dudit flanc 21. Dans cette configuration, le flanc latéral 21 correspondant à l'ouverture d'aération, est séparé de la partie supérieure de la couverture 2 de la serre et est fixé par sa zone inférieure horizontale à la lisse inférieure 19. Toujours selon cette configuration, la partie supérieure de la couverture 2 de la serre, par sa bordure correspondante, est fixée à la lisse supérieure 18 de l'ouverture d'aération. Selon cette forme de réalisation, la bordure supérieure 21a dudit flanc 21 est libre d'être déplacée en hauteur et n'est fixée que par ses deux extrémités à l'ossature de la serre et plus particulièrement aux deux arceaux d'extrémité 10 et ce, au plus près de la lisse supérieure 18. D'une autre manière, cette bordure supérieure, hormis ses extrémités, peut glisser en hauteur, le long des dits montants 111. Avantageusement, la bordure supérieure est équipée sur tout son long, d'un bourrelet longitudinal 213 élastiquement déformable, tant axialement que radialement.

Selon une forme pratique de réalisation, donnée à titre d'exemple non limitatif, la bordure 21a est fixée par le bourrelet 213 aux deux arceaux d'extrémité 10 et plus particulièrement aux montants 100 de ces derniers.

De préférence, l'ouverture d'aération est équipée d'un filet anti-insecte 25a s'étendant entre les lisses supérieure 18 et inférieure 19.

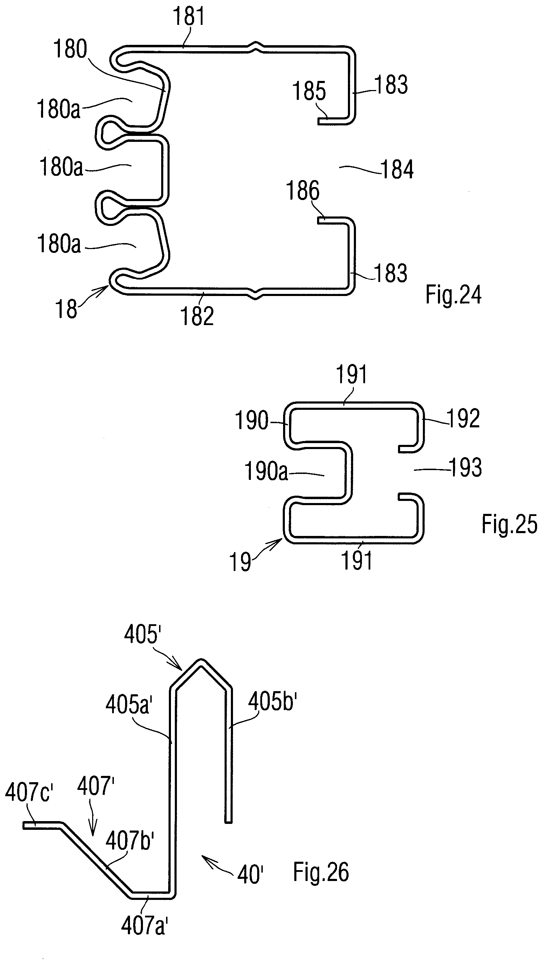

De préférence, la lisse supérieure 18 (Fig.24) comporte quatre parois perpendiculaires deux à deux, à savoir une paroi avant 180, deux parois latérales horizontales, supérieure 181 et inférieure 182, et une paroi arrière verticale 183, opposée à la paroi avant 180. La paroi arrière 183 présente une fente longitudinale 184, médiane, bordée par deux retours à angle droit, horizontaux supérieur 185 et inférieur 186, orientés tous deux vers la paroi avant 180 et s'étendant dans le volume interne de la lisse 18. Les parois latérales 181, 182, parallèles l'une à l'autre, joignent les parois avant et arrière. Cette lisse 18 comporte plusieurs gorges longitudinales 180a, horizontales. Ces gorges 180a sont ouvertes vers l'extérieur de la lisse 18 et sont formées par déformation de la paroi avant 180. Selon une forme pratique de réalisation, la lisse 18 comporte trois gorges adjacentes 180a, à savoir, une gorge supérieure, une gorge médiane et une gorge inférieure. La lisse supérieure 18 est positionnée en sorte que les gorges longitudinales 180a soient tournées vers l'extérieur de la serre et en sorte que la fente longitudinale 184 soit en regard du volume interne de ladite serre.

La gorge supérieure 180a de la lisse 18 reçoit en fixation la bordure correspondante de la couverture 2. Cette couverture est fixée dans cette gorge par un profilé de pincement de section droite en U et par une clé de blocage de section droite oblongue, introduite en serrage dans le profilé de pincement. Le but de cette clé est de s'opposer au resserrement des ailes latérales de l'élément de pincement. Les ailes latérales de l'élément de pincement, sont pourvues chacune d'un retour à angle droit formant aile d'appui. L'élément de pincement et la clé de blocage sont de préférence constitués par un matériau de synthèse approprié.

La gorge inférieure 180a de cette lisse supérieure 18 reçoit en fixation la bordure supérieure horizontale du filet anti-insecte 25a. Ce filet anti-insecte est fixé dans cette gorge par un profilé de pincement, de section droite en U et par une clé de blocage de section droite oblongue, introduite en serrage dans le profilé de pincement et plus précisément, entre les ailes latérales de ce profilé. Comme décrit précédemment, les ailes latérales de l'élément de pincement, sont pourvues chacune d'un retour à angle droit formant aile d'appui. L'élément de pincement et la clé de blocage sont de préférence constitués par un matériau de synthèse approprié.

La lisse inférieure 19 (Fig.25) comporte quatre parois perpendiculaires deux à deux à savoir une paroi avant 190 verticale, deux parois latérales 191 horizontales et une paroi arrière verticale 192, opposée à la paroi avant 190. La paroi arrière 192 présente, par exemple, une fente longitudinale 193, médiane, bordée par deux retours à angle droit, horizontaux orientés tous deux vers la paroi avant 190 et s'étendant dans le volume interne de la lisse 19. La lisse 19 comporte une gorge longitudinale 190a, horizontale, ouverte vers l'extérieur et formée par déformation de la paroi avant 190. Cette lisse 19 est positionnée en sorte que la gorge 190a soit tournée vers l'extérieur du volume interne de la serre. Dans cette gorge sont fixés la bordure inférieure du filet anti-insecte ainsi que le flanc latéral déplaçable, et ce à l'aide d'un profilé de pincement, de section droite en U et d'une clé de blocage de section droite oblongue, introduite en serrage entre les ailes latérales de ce profilé.

De préférence, l'affalement et le relevage du ou de chaque flanc déplaçable en hauteur 21, sont des opérations mécanisées et ledit flanc est assujetti à un ensemble d'affalement et de relevage 4', de préférence à commande centralisée, par action duquel, ledit flanc est amené en position d'affalement pour dégager l'ouverture d'aération ou bien est ramené en position d'obturation de ladite ouverture.

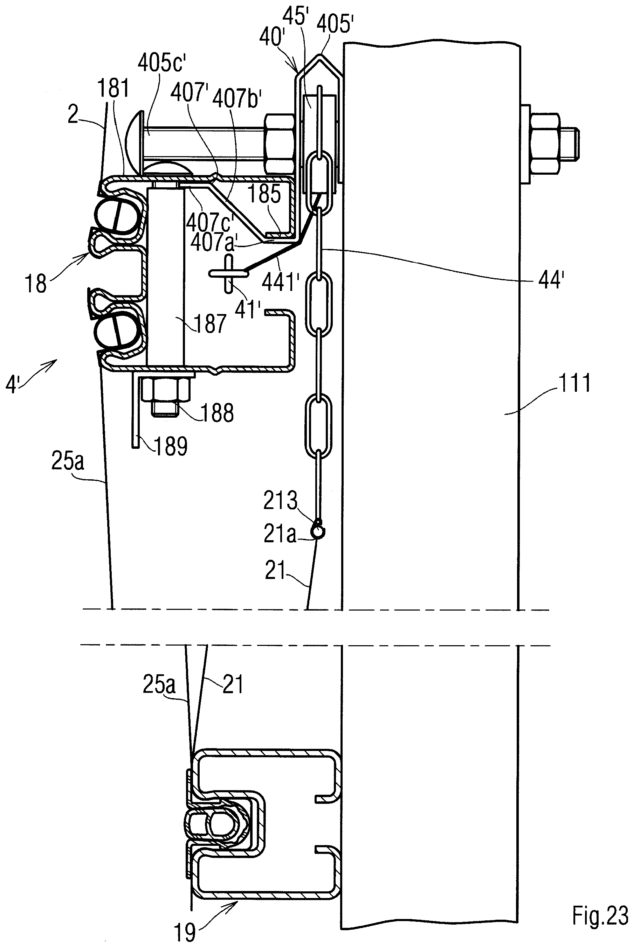

En figure 23 est représenté un ensemble d'affalement et de relevage 4'. Cet ensemble est apte à agir radialement sur la bordure supérieure 21a du ou de l'un des flancs latéraux 21 déplaçables en hauteur, pour, lors de l'action d'affalement, relâcher les efforts de maintien qu'il applique sur cette bordure 21a et permettre l'affalement du flanc 21 sous l'effet de son poids, et lors de l'action de relevage, exercer sur cette bordure supérieure 21a des efforts radiaux de traction orientés vers le haut afin de déployer ledit flanc et ramener sa bordure 21a en position supérieure afin de clore l'ouverture latérale d'aération.

Cet ensemble 4' de relevage et d'affalement est constitué par :
- au moins un module relais de relevage et d'affalement 40' fixé au montant 111 correspondant de l'un des arceaux intermédiaires 11 et ce au-dessus du flanc latéral relevable 21 correspondant, ledit module 40' étant équipé d'une pièce d'enroulement partiel 45',
- un organe de commande horizontal 41' assujetti d'une part à un moyen de traction et d'autre part à un organe de rappel, situés à ses deux extrémités,
- au moins un lien de relevage 44' fixé d'une part à la bordure supérieure 21a dudit flanc latéral 21, et d'autre part au dit organe de commande 41', ledit lien de relevage 44' entre la bordure supérieure 21a du flanc latéral 21 et l'organe de commande 41' coopérant en enroulement partiel avec la pièce 45' d'enroulement partiel, le point de fixation du lien de relevage 44 à la bordure supérieure du flanc latéral 21, étant situé de préférence à l'aplomb de la pièce d'enroulement partiel 45,
- au moins un élément longiforme de guidage porté par le ou chaque module relais 40', ledit élément longiforme de guidage accueillant l'organe de commande horizontal 41'.

De préférence, l'ensemble de relevage 4' comporte plusieurs modules relais 40' chacun associé un arceau intermédiaire 11.

Avantageusement, l'élément longiforme de guidage est formé par la lisse supérieure 18. Ainsi, l'organe de commande 41' est engagé dans le volume interne de la lisse supérieure 18 et se trouve protégé par cette lisse 18. Selon une première forme de réalisation, le lien de relevage 44' est engagé dans la fente 184 de la lisse 18 pour être fixé à l'organe de commande 41'. Selon une seconde forme de réalisation, le lien de relevage 44' est fixé à l'organe de commande 41', par l'intermédiaire d'un lien élastique 441'. Ce lien élastique 441' permet notamment le mouvement de l'organe de commande 41' malgré l'éventuelle immobilisation du ou de l'un lien de relevage 44' par coincement ou autre. Ce lien élastique 441' comporte un crochet d'extrémité pour être fixé à l'un des anneaux de l'organe de commande 41'.

Comme précédemment, l'organe de commande 41' est formé par une chaîne du type marine c'est-à-dire une chaîne à anneaux. Préférentiellement, le lien de relevage 44' est également formé par une chaîne du type marine mais ce dernier pourra être de tout autre type. Le lien de relevage est fixé par un crochet approprié à la bordure 21a du flanc latéral 21.

De préférence le moyen de traction agissant sur l'organe de commande 41' se présente sous la forme d'un treuil débrayable, tandis que l'organe de rappel est formé par un lien élastique, un ressort, un contre poids ou autre. Ce treuil débrayable comporte un tambour sur lequel s'enroule l'organe de commande 41' ou bien un câble fixé à cet organe de commande 41'.

En vue du relevage du flanc latéral 21 et donc de l'obturation de l'ouverture d'aération, le moyen de traction est actionné dans le sens adéquat, ce qui a pour effet d'appliquer un effort de traction axial sur l'organe de commande 41' sous l'effet duquel ce dernier est déplacé en translation en étant guidé par la lisse supérieure 18, ce déplacement s'effectuant à rencontre de l'action exercée par l'organe de rappel. Du fait de son déplacement, l'organe de commande 41' entraîne le ou chaque lien de relevage 44' lequel alors entraîne vers le haut la bordure supérieure du flanc latéral 21 jusqu'à parvenir à la position d'obturation de l'ouverture d'aération. Par manoeuvre inverse du moyen de traction, l'organe de commande 41' est déplacé en sens inverse sous l'effet de l'action de l'organe de rappel 43 et le flanc latéral 21, sous l'effet tant de son propre poids rejoint la position de dégagement de l'ouverture d'aération.

Comme décrit précédemment, le treuil pourra actionner plusieurs ensembles de relevage et d'affalement 4'.

Selon une forme pratique de réalisation, le module relais 40' est formé par pliage d'une tôle métallique d'épaisseur appropriée. Ce module relais 40' est fixé à l'arceau intermédiaire correspondant 11 et reçoit en emboîtement de forme la lisse supérieure 18 pour supporter cette dernière.

Ce module relais 40' (Fig.26) comporte une chape supérieure 405' accueillant la pièce d'enroulement partiel 45' et une forme d'emboîtement 407', prolongeant latéralement la chape 405', la forme d'emboîtement 407' étant engagée dans la lisse supérieure 18 pour recevoir cette dernière en fixation. La lisse supérieure est donc portée latéralement à la chape 405' par la forme d'emboîtement 407'.

La chape 405' se présente sous la forme d'un U inversé et comprend deux ailes latérales 405a', 405b', verticales, parallèles et une aile basale en partie supérieure. La première aile latérale 405a' de la chape est prolongée latéralement par la forme d'emboîtement 407'. La seconde aile 405b' de la chape est fixée contre la face avant du montant 111 correspondant de l'arceau correspondant. Les deux ailes latérales 405a', 405b' de la chape sont percées de part en part pour accueillir deux organes horizontaux 405c' de fixation au montant 111 correspondant, ces organes de fixation 405c' étant associés à une bride de serrage 405d' appliquée contre le montant 111, à l'opposé de la chape 405'. Le montant 111 se trouve donc enserré entre la bride 405d' et la chape 405', les deux organes de fixation 405c' étant situés de part et d'autre du montant 111.

Selon une forme pratique de réalisation, chaque organe de fixation 405c' est constitué par un boulon formé par une vis sur laquelle sont engagés deux écrous. Un des écrous est appliqué contre la première aile 405a' de la chape 405' tandis que l'autre écrou est appliqué contre la bride de serrage 405d'. Préférentiellement, la tête de la vis, est située à distance de la chape 405' et vient en appui par sa bordure périphérique, contre la paroi latérale supérieure 181 de la lisse supérieure 18. Une telle disposition a pour but de s'opposer au pivotement vers le haut de la lisse supérieure 18 sous l'effet de la tension de la partie supérieure de la couverture 2.

Pour éviter le resserrement des ailes latérales 405a', 405b' de la chape 405' sous l'effet du serrage des deux écrous, des entretoises sont disposées entre les deux dites ailes. De préférence, ces entretoises sont enfilées sur les tiges des vis constitutives des organes de fixation 405c'. Avantageusement, une de ces entretoises est formée par la pièce d'enroulement partiel 45'. De préférence, cette pièce d'enroulement partiel 45' est formée par un roulement à billes. La bague intérieure du roulement à bille est avantageusement enserrée entre deux rondelles d'écartement. Une telle disposition permet de maintenir la bague extérieure du roulement 45' à distance des ailes latérale de la chape 405'. Selon une forme pratique de réalisation, l'autre entretoise est formée par un roulement à billes.

La forme d'emboîtement 407' (Fig.26) du module relais 40' est formée par :
- une première aile horizontale 407a' prolongeant à angle droit, latéralement vers l'extérieur de la chape 405', la première aile latérale 405a' de cette dernière,
- une aile 407b' inclinée vers le haut, prolongeant vers l'extérieur de la chape 405', la première aile horizontale 407a'
- et une seconde aile horizontale 407c' prolongeant toujours vers l'extérieur de la chape, l'aile inclinée 407b'.

La première aile verticale de la chape 405a', la première aile horizontale 407a' et l'aile inclinée 407b' définissent un logement dans lequel sont disposés le retour supérieur 185 de la lisse supérieure 18 et la partie supérieure de la paroi 183. La seconde aile horizontale 407c' reçoit en appui la paroi supérieure horizontale 181 de la lisse supérieure.

Selon une forme pratique de réalisation, en vue de la fixation de la lisse supérieure 18, la seconde aile horizontale 407c' de la forme d'emboîtement 407' est enserrée entre la face interne de la paroi latérale supérieure 181 de la lisse supérieure 18 et l'extrémité supérieure d'au moins une entretoise tubulaire 187, interne à la lisse supérieure 18, en appui par son extrémité inférieure contre la face interne de la paroi latérale inférieure 182 de cette lisse supérieure 18. Cette entretoise tubulaire 187, de section droite polygonale, est engagée sur la tige de la vis d'un boulon de serrage 188, en appui, par son écrou, contre la face externe de l'une des deux parois latérales de la lisse supérieure 18 et, par la tête de sa vis, contre la face externe de la paroi latérale opposée de cette lisse 18. La tige de la vis de ce boulon 188 est engagée dans deux perçages traversants formés dans les deux parois latérales 181, 182.

Outre la fixation à la seconde aile horizontale 407c', l'entretoise 187 ou chaque entretoise a pour but d'éviter que sous l'effet du serrage, les deux parois latérales horizontales de la lisse supérieure 18 se rapprochent l'une de l'autre.

Avantageusement, seront prévus plusieurs boulons de serrage 188 et entretoises 187, les parois latérales supérieure 181 et inférieure 182 de la lisse supérieure 18 comporteront autant de perçages que nécessaire.

En variante, la seconde aile horizontale 407c' de la forme d'emboîtement comporte une série d'échancrure pour venir se positionner, par ces échancrures, autour des tiges des vis des boulons de serrage 188.

Grâce à de telles dispositions, la lisse supérieure 18 est écartée de chaque montant 111 ce qui facilite l'engagement de l'organe de commande 41' dans le volume interne de la lisse par passage au travers de la fente longitudinale 184. De plus, en raison de ces dispositions, la bordure supérieure 25a du flanc 25, en position d'obturation de l'ouverture d'aération, pourra venir d'une part contre la pièce d'enroulement partiel 45' du ou de chaque module relais 40' et d'autre part en regard de la lisse supérieure 18. Cette disposition assure l'obturation complète de l'ouverture d'aération.

Enfin, à l'un des boulons 188 est solidarisée une patte inférieure 189 de fixation d'un des cordages 5 de maintien.

Il va de soi que la présente invention peut recevoir tous aménagements et variantes du domaine des équivalents techniques sans pour autant sortir du cadre du présent brevet tel que défini par les revendications ci-après.

## Revendications

1. Serre pour la culture des plantes vivrières et autres plantes, formée d'une ossature porteuse (1) et d'une couverture (2) étanche, transparente à la lumière montée en fixation sur l'ossature (1), laquelle ossature est formée de deux arceaux d'extrémité (10) et d'arceaux intermédiaires (11), lesdits arceaux d'extrémité (10) et intermédiaires (11) étant parallèles, équidistants et réunis les uns aux autres par au moins une entretoise (13, 14), chaque arceau comportant deux formes de piètement (101a) rectilignes verticales par lesquelles il est encastré à deux pieux enfichés dans le sol, deux montants (101, 111) dans le prolongement des formes de piètement et une partie supérieure arquée (100, 110) assemblée aux deux montants (101, 111) et ladite couverture (2) étant maintenue sur les deux arceaux d'extrémité (10) par des organes de pinces et sur les arceaux intermédiaires par des filins (22) installés sur ladite couverture (2) et disposés en tension deux à deux de part et d'autre de chaque arceau intermédiaire (11), et ladite couverture (2) par appui sur l'ossature (1) formant un dôme (20) en partie supérieure et deux flancs latéraux longitudinaux (21) s'étendant depuis le dôme formé vers le sol, ***caractérisée en ce que*** l'une au moins entretoise (13, 14) est formée par un élément souple fixé aux différents arceaux, ladite entretoise souple étant disposée en tension entre ces derniers et étant recouverte par la couverture (2).

2. Serre selon la revendication 1, ***caractérisée en ce que*** qu'elle comprend une entretoise souple (13) occupant une position sommitale, et au moins deux entretoises souples (14) occupant des positions latérales chacune au-dessus d'un des flans latéraux (21).

3. Serre selon la revendication précédente, ***caractérisé en ce qu'***au moins l'entretoise sommitale (13) est formée par une gaine gonflable.

4. Serre selon la revendication précédente, ***caractérisée par*** des moyens de fixation de l'entretoise sommitale (13) à l'ossature de la serre, lesdits moyens se développant de part et d'autre de l'entretoise sommitale (13) et solidarisent cette dernière aux arceaux (10 et 11), chaque moyen de fixation étant constitué d'au moins un lien élastique (133) et d'au moins une interface de liaison mécanique fixée à l'entretoise (13) et recevant en fixation au moins un lien élastique (133), lequel est fixé à l'arceau (10, 11) correspondant de l'ossature (1) de la serre.

5. Serre selon l'une quelconque des revendications précédentes, ***caractérisée en ce que*** l'un au moins flanc latéral (21) est agencé de manière déplaçable en hauteur pour occuper soit une position de dégagement d'une ouverture latérale d'aération soit une position d'occlusion de cette ouverture et que l'ouverture d'aération ou chaque ouverture d'aération est dégagée par relevage du flanc latéral (21) correspondant, la bordure inférieure de ce dernier recevant sur tout son long un bourrelet longitudinal (210) élastiquement déformable tant axialement que radialement, ledit bourrelet (210), par ses deux extrémités, étant fixé rigidement à la partie inférieure des deux arceaux d'extrémité 10 et ledit bourrelet (210) étant mis en tension entre les deux arceaux (10) d'extrémité.

6. Serre selon la revendication précédente, ***caractérisée en ce que*** le relevage du ou de chaque flanc latéral relevable (21) est mécanisé et que ledit flanc est assujetti à un ensemble de relevage (4) externe, à commande centralisée, par action duquel la bordure inférieure dudit flanc est écartée du sol afin de dégager l'ouverture d'aération, ou bien est ramenée en appui sur le sol afin d'obturer ladite ouverture, l'ensemble de relevage (4) comprenant :
- au moins un module externe de guidage et de maintien (40) occupant une position fixe par rapport aux arceaux et ce au-dessus du flanc latéral relevable (21) correspondant que forme la couverture (2), ledit module externe comportant au moins un chemin de guidage formé par une gorge de guidage, de section droite en Vé,
- un organe de commande horizontal (41) engagé et guidé dans le chemin de guidage que comporte le module externe (40), ledit organe de commande (41) étant assujetti d'une part à un moyen de traction (42) et d'autre part à un organe de rappel (43),
- au moins une corde de relevage (44) fixée d'une part à la bordure inférieure dudit flanc latéral (21), et d'autre part au dit organe de commande, ladite corde de relevage (44), entre la bordure inférieure du flanc latéral (21) et l'organe de commande (41) coopérant en enroulement partiel avec une pièce d'enroulement partiel (45) fixée au module externe de guidage (40), le point de fixation de la corde de relevage (44) à la bordure inférieure du flanc latéral (21) étant situé à l'aplomb de la pièce d'enroulement partiel (45),
chaque montant (110) correspondant au flanc latéral relevable (21) étant équipé d'un support de fixation auquel est fixé, au travers de la couverture 2, un module externe de guidage (40) avec lequel coopère une corde de relevage (44) dédiée.

7. Serre selon la revendication précédente, ***caractérisée en ce que*** le module externe de guidage (40) comprend une platine (400) plane comportant deux grandes face opposées (400a, 400b), dont une (400b) est tournée vers l'extérieur, que la platine (400) porte au moins un axe (402), s'étendant vers l'extérieur depuis la grande face (400b), sur lequel axe est enfilée la bague interne d'un roulement à billes (404) et est fixé un élément latéral de rétention (406), arqué, sans angle vif, s'étendant vers le haut, définissant avec la bague externe du roulement à billes (404) un chemin de guidage accueillant en guidage l'organe de commande horizontal (41) et que sous et à distance du chemin de guidage formé, au droit de l'intervalle entre les deux roulements (404) la platine (400) reçoit en fixation une pièce d'enroulement partiel (45), de forme cylindrique, comportant une surface courbe d'enroulement (45a) sur laquelle glisse la corde de relevage (44).

8. Serre selon l'une des revendications 1 à 4, ***caractérisée en ce que*** l'un au moins flanc latéral (21) est agencé de manière déplaçable en hauteur pour occuper, soit une position de dégagement d'une ouverture latérale d'aération, soit une position d'occlusion de cette ouverture, et l'ouverture d'aération ou chaque ouverture d'aération est formée entre une lisse supérieure horizontale (18) et une lisse inférieure horizontale (19), que la lisse supérieure horizontale (18) est installée fixement par rapport aux arceaux (10, 11), que la lisse inférieure horizontale (19) est fixée par des étriers aux montants correspondants (100, 111) des arceaux (10, 11), et que ladite ouverture est dégagée par affalement du flanc latéral (21) correspondant, et est obturée par relevage dudit flanc (21), ledit flanc comportant une bordure supérieure (21a), laquelle est libre d'être déplacée et n'est fixée que par ses deux extrémités aux deux arceaux d'extrémité (10) et ce, au plus près de la lisse supérieure (18).

9. Serre selon la revendication précédente, ***caractérisée en ce que*** la lisse supérieure (18) comporte quatre parois perpendiculaires deux à deux à savoir une paroi avant (180), deux parois latérales horizontales, supérieure (181) et inférieure (182), et une paroi arrière verticale (183), que la paroi arrière (183) présente une fente longitudinale (184), médiane, bordée par deux retours à angle droit, horizontaux orientés tous deux vers la paroi avant, à savoir un retour supérieur (185) et un retour inférieur (186), que ladite lisse (18) comporte plusieurs gorges longitudinales (180a), horizontales, ouvertes vers l'extérieur et formées par déformation de la paroi avant (180), que le flanc latéral (21) correspondant à l'ouverture d'aération est séparé de la partie supérieure de la couverture (2) et est fixé par sa zone inférieure horizontale à la lisse inférieure (19), que la partie supérieure de la couverture, par sa bordure correspondante, est fixée dans la gorge (180a) supérieure de la lisse supérieure (18) et que la bordure supérieure (21a) dudit flanc (21) est équipée sur tout son long, d'un bourrelet longitudinal (213) élastiquement déformable.

10. Serre selon l'une des revendications 8 ou 9, ***caractérisée en ce que*** l'ouverture d'aération est équipée d'un filet anti-insecte (25a) s'étendant entre les lisses supérieure (18) et inférieure (19).

11. Serre selon l'une des revendications 8 à 10, ***caractérisée par*** un ensemble de relevage (4') apte à agir radialement sur la bordure supérieure (21a) du ou de l'un des flancs latéraux (21) déplaçables en hauteur, pour, lors de l'action d'affalement, relâcher les efforts de maintien qu'il applique sur cette bordure (21a) et permettre l'affalement du flanc (21) sous l'effet de son poids, et lors de l'action de relevage, exercer sur cette bordure supérieure (21a) des efforts radiaux de traction, orientés vers le haut afin de déployer ledit flanc et clore l'ouverture latérale d'aération, ledit ensemble de relevage (4') étant constitué par :
- au moins un module relais (40') de relevage et d'affalement fixé au montant (111) correspondant de l'un des arceaux intermédiaires (11) et ce au-dessus du flanc latéral relevable (21) correspondant, ledit module étant équipé d'une pièce d'enroulement partiel (45'),
- un organe de commande horizontal (41') assujetti d'une part à un moyen de traction et d'autre part à un organe de rappel,
- au moins un lien de relevage (44') fixée d'une part à la bordure supérieure (21a) dudit flanc latéral (21), et d'autre part au dit organe de commande (41'), ledit lien de relevage (44'), entre la bordure supérieure (21a) du flanc latéral (21) et l'organe de commande (41') coopérant en enroulement partiel avec la pièce (45') d'enroulement partiel,
- au moins un élément longiforme de guidage porté par le ou chaque module relais (40'), ledit élément longiforme de guidage accueillant l'organe de commande horizontal (41').

12. Serre selon la revendication précédente, ***caractérisée en ce que*** l'élément longiforme de guidage est formé par la lisse supérieure (18), l'organe de commande (41') étant engagé dans le volume interne de ladite lisse supérieure.

13. Serre selon l'une des revendications 11 ou 12, ***caractérisée en ce que*** le module relais (40') est fixé à l'arceau intermédiaire (11) correspondant et reçoit en emboîtement de forme la lisse supérieure (18) pour supporter cette dernière,
ledit module relai (40') comportant une chape supérieure (405') accueillant la pièce d'enroulement partiel (45') et une forme d'emboîtement (407') engagée dans la lisse supérieure (18) pour recevoir cette dernière en fixation, ladite forme d'emboîtement (407') prolongeant latéralement la chape (405'), laquelle se présente sous la forme d'un U inversé et comprend deux ailes latérales (405a', 405b'), verticales parallèles et une aile basale en partie supérieure,
- la première aile latérale (405a') de la chape (405') étant prolongée latéralement par la forme d'emboîtement (407'),
- la seconde aile (405b') de la chape (405') étant fixée contre la face avant du montant (111) correspondant de l'arceau correspondant,
- les deux ailes latérales (405a', 405b') de la chape (405') étant percées de part en part pour accueillir des organes (405c') de fixation au montant (111) correspondant, et
- les organes de fixation (405c') étant associés à une bride de serrage (405d') appliquée contre le montant (111), à l'opposé de la chape (405').

14. Serre selon la revendication précédente, ***caractérisée en ce que*** la forme d'emboîtement (407') est formée par :
- une première aile horizontale (407a') prolongeant à angle droit, vers l'extérieur de la chape (405'), la première aile latérale (405a') de cette dernière,
- une aile (407b') inclinée vers le haut, prolongeant vers l'extérieur de la chape (405'), la première aile horizontale (407a'),
- une seconde aile horizontale (407c') prolongeant vers l'extérieur de la chape (405'), l'aile inclinée (407b'),
- que la première aile verticale de la chape (405a'), la première aile horizontale (407a') et l'aile inclinée (407b') définissent un logement dans lequel sont disposés le retour supérieur (185) de la lisse supérieure (18) et la partie supérieure de la paroi (183), et que la seconde aile horizontale (407c') reçoit en appui la paroi supérieure horizontale (181) de la lisse supérieure (18).

15. Serre selon l'une quelconque des revendications précédentes, ***caractérisée en ce que*** les deux arceaux avant (10) et (11) et les deux arceaux arrière (10) et (11) de l'ossature (1), sont entretoisés par des membrures rigides (15, 17) et forment deux ensembles indépendants indéformables aptes à encaisser les efforts de traction appliqués par la ou chaque entretoise souple (13, 14).

16. Serre selon l'une quelconque des revendications précédentes, ***caractérisée en ce que*** les montants (101, 111) de chaque arceau (100, 110) sont de même hauteur ou de hauteurs différentes.

## Patentansprüche

1. Gewächshaus zum Anbau von Nahrungsmittelpflanzen und sonstigen Pflanzen, gebildet aus einem tragenden Gerüst (1) und einer Bedeckung (2), die dicht abschließt und lichtdurchlässig ist, wobei sie an dem Gerüst (1) befestigt ist, wobei das Gerüst aus zwei endständigen Bögen (10) und aus dazwischenliegenden Bögen (11) gebildet ist, wobei die endständigen (10) und dazwischenliegenden (11) Bögen parallel, gleichmäßig beabstandet und durch mindestens eine Querstrebe (13, 14) miteinander verbunden sind, wobei jeder Bogen zwei vertikale geradlinige Fußteilformen (101a), mittels derer er mit zwei Pfählen, welche in den Boden gesteckt sind, eingebaut ist, zwei Ständer (101, 111), welche sich an die Fußteilformen anschließen, und einen oberen gebogenen Abschnitt (100, 110) aufweist, welcher mit den Ständern (101, 111) zusammengefügt ist, und wobei die Bedeckung (2) mittels Klemmorganen auf den endständigen Bögen (10) und mittels Leinen (22), welche an der Bedeckung (2) befestigt und beiderseits jedes der dazwischenliegenden Bögen (11) paarweise gespannt angeordnet sind, auf den dazwischenliegenden Bögen gehalten wird, wobei die Bedeckung (2) auf dem Gerüst (1) aufliegt und auf diese Weise im oberen Abschnitt ein Gewölbe (20) sowie zwei längsgerichtete Seitenflanken (21) bildet welche sich ausgehend von dem Gewölbe zum Boden erstrecken, ***dadurch gekennzeichnet, dass*** die mindestens eine Querstrebe (13, 14) von einem biegsamen Element gebildet wird, das an den verschiedenen Bögen befestigt ist, wobei die biegsame Querstrebe derart angeordnet ist, dass sie zwischen den letzteren gespannt ist, wobei sie weiterhin von der Bedeckung (2) abgedeckt wird.

2. Gewächshaus nach Anspruch 1, ***dadurch gekennzeichnet, dass*** es eine biegsame Querstrebe (13), die eine gipfelständige Position einnimmt, und mindestens zwei biegsame Querstreben (14) umfasst, die jeweils seitliche Positionen oberhalb einer der Seitenflanken (21) einnehmen.

3. Gewächshaus nach dem vorhergehenden Anspruch, ***dadurch gekennzeichnet, dass*** zumindest die gipfelständige Querstrebe (13) von einer aufblasbaren Hülle gebildet wird.

4. Gewächshaus nach dem vorhergehenden Anspruch, ***gekennzeichnet durch*** Mittel zur Befestigung der gipfelständigen Querstrebe (13) an dem Gerüst des Gewächshauses, wobei die Mittel sich beiderseits der gipfelständigen Querstrebe (13) erstrecken und diese fest mit den Bögen (10 und 11) verbinden, wobei jedes der Befestigungsmittel aus mindestens einem elastischen Bindeglied (133) und aus mindestens einer Grenzfläche zur mechanischen Verbindung besteht, die an der Querstrebe (13) befestigt ist und mindestens ein elastisches Bindeglied (133) befestigend aufnimmt, welches an dem entsprechenden Bogen (10, 11) der Gerüsts (1) des Gewächshauses befestigt ist.

5. Gewächshaus nach einem beliebigen der vorhergehenden Ansprüche, ***dadurch gekennzeichnet, dass*** die mindestens eine Seitenflanke (21) derart angeordnet ist, dass sie in Höhenrichtung verschiebbar ist, um entweder eine Position, in welcher eine seitliche Lüftungsöffnung freigegeben wird, oder eine Position einzunehmen, in welcher diese Öffnung verschlossen ist, und dass die Lüftungsöffnung oder jede der Lüftungsöffnungen freigegeben wird, indem die entsprechende Seitenflanke (21) angehoben wird, wobei der untere Rand der letzteren über seine gesamte Länge einen längsgerichteten Wulst (210) aufnimmt, welcher sowohl axial als als radial elastisch verformbar ist, wobei der Wulst (210) mit seinen beiden Enden auf unnachgiebige Weise am unteren Abschnitt der beiden endständigen Bögen 10 befestigt ist und der Wulst (210) zwischen den beiden endständigen Bögen (10) gespannt wird.

6. Gewächshaus nach dem vorhergehenden Anspruch, ***dadurch gekennzeichnet, dass*** das Anheben der oder jeder der anhebbaren Seitenflanke(n) (21) maschinengetrieben erfolgt und dass eine externe Hebebaugruppe (4), mit Zentralsteuerung, derart auf die Flanke einwirken gelassen wird, dass der untere Rand der Flanke vom Boden entfernt wird, um die Lüftungsöffnung freizugeben, oder aber wieder auf dem Boden in Auflage gebracht wird, um diese Öffnung zu verschließen, wobei die Hebebaugruppe (4) Folgendes umfasst:
- mindestens ein externes Führungs- und Haltemodul (40), das gegenüber den Bögen eine feste Position einnimmt, und zwar oberhalb der entsprechenden anhebbaren Seitenflanke (21), welche von der Bedeckung (2) gebildet wird, wobei das externe Modul mindestens eine Führungsstrecke aufweist, die von einer Führungsnut mit V-förmigem Querschnitt gebildet wird,
- ein horizontales Steuerorgan (41), das in die Führungsstrecke, mit welcher das externe Modul (40) versehen ist, eingreift und darin geführt wird, wobei auf das horizontale Steuerorgan (41) einerseits ein Zugmittel (42) und andererseits ein Rückholorgan (43) einwirken,
- mindestens ein Hebeseil (44), dass einerseits am unteren Rand der Seitenflanke (21) und andererseits am Steuerorgan befestigt ist, wobei das Hebeseil (44), zwischen dem unteren Rand der Seitenflanke (21) und dem Steuerorgan (41), mit einem Stück (45) zum teilweisen Aufrollen, welches an dem externen Führungsmodul (40) befestigt ist, beim teilweisen Aufrollen zusammenwirkt, wobei der Punkt, an welchem das Hebeseil (44) am unteren Rand der Seitenflanke (21) befestigt ist, sich auf derselben vertikalen Linie wie das Stück (45) zum teilweisen Aufrollen befindet,
wobei jeder Ständer (110), welcher der anhebbaren Seitenflanke (21) entspricht, mit einem Befestigungsträger ausgestattet ist, an welchem ein externes Führungsmodul (40), mit dem ein dafür vorgesehenes Hebeseil (44) zusammenwirkt, durch die Öffnung 2 befestigt ist.

7. Gewächshaus nach dem vorhergehenden Anspruch, ***dadurch gekennzeichnet, dass*** das externe Führungsmodul (40) eine ebene Platte (400) umfasst, die zwei große gegenüberliegende Flächen (400a, 400b) aufweist, wobei eine (400b) davon dem Außenraum zugewandt ist, dass die Platte (400) mindestens eine Achse (402) trägt, die sich ausgehend von der großen Fläche (400b) nach außen erstreckt, wobei auf diese Achse der innere Ring eines Kugellagers (404) aufgesteckt ist und darauf ein seitliches Halteelement (406) befestigt ist, welches ohne spitze Winkel gebogen ist und sich nach oben erstreckt, wobei es mit dem äußeren Ring des Kugellagers (404) eine Führungsstrecke begrenzt, welche das horizontale Steuerorgan (41) führend aufnimmt, und dass die Platte (400), unter der entstandenen Führungsstrecke und zu dieser beabstandet, rechtwinklig zu dem Raum zwischen den beiden Lagern (404) ein Stück (45) zum teilweisen Aufrollen befestigend aufnimmt, welches von zylindrischer Form ist und eine gekrümmte Aufrollfläche (45a) aufweist, auf welcher das Hebeseil (44) gleitet.

8. Gewächshaus nach einem der Ansprüche 1 bis 4, ***dadurch gekennzeichnet,* dass** mindestens eine Seitenflanke (21) derart angeordnet ist, dass sie in Höhenrichtung verschiebbar ist, um entweder eine Position, in welcher eine seitliche Lüftungsöffnung freigegeben ist, oder eine Position einzunehmen, in welcher diese Öffnung verschlossen ist, und die Lüftungsöffnung oder jede der Lüftungsöffnungen zwischen einem horizontalen oberen Lauf (18) und einem horizontalen unteren Lauf (19) gebildet ist, dass der horizontale obere Lauf (18) bezüglich der Bögen (10, 11) fest installiert ist, dass der horizontale untere Lauf (19) mittels Bügeln an den entsprechenden Ständern (100, 111) der Bögen (10, 11) befestigt ist, und dass die Öffnung freigegeben wird, indem die entsprechende Seitenflanke (21) herabgelassen wird und sie verschlossen wird, indem die die Seitenflanke (21) angegeben wird, wobei die Flanke einen oberen Rand (21a) aufweist, der ungehindert verschoben werden kann und lediglich mit seinen beiden Enden an den endständigen Bögen (10) befestigt ist, und zwar sehr nahe am oberen Lauf (18).

9. Gewächshaus nach dem vorhergehenden Anspruch, ***dadurch gekennzeichnet, dass*** der obere Lauf (18) vier paarweise zueinander rechtwinklige Wände umfasst, das heißt, eine vordere Wand (180), zwei horizontale seitliche Wände, oberer (181) und unterer (182) Art, und eine hintere Wand (183), dass die hintere Wand (183) einen mittigen längsgerichteten Spalt (184) aufweist, der von zwei rechtwinkligen Rückbiegungen begrenzt ist, die horizontal sind und beide zur vorderen Wand zeigen, nämlich eine obere Rückbiegung (185) und eine untere Rückbiegung (186), dass der Lauf (18) längsgerichtete Nuten (180a) aufweist, die horizontal verlaufen, nach außen hin offen sind und gebildet werden, indem die vordere Wand (180) verformt wird, dass die Seitenflanke (21), welche der Lüftungsöffnung entspricht, von dem oberen Abschnitt der Bedeckung (2) getrennt ist, wobei sie mit ihrem horizontalen unteren Bereich an dem unteren Lauf (19) befestigt ist, dass der obere Abschnitt der Bedeckung, mit seinem entsprechenden Rand, in der oberen Nut (180a) des oberen Laufs (18) befestigt ist, und dass der obere Rand (21a) der Flanke (21) auf seiner gesamten Länge mit einem längsgerichteten Wulst (213) versehen ist, der elastisch verformbar ist.

10. Gewächshaus nach einem der Ansprüche 8 oder 9, ***dadurch gekennzeichnet, dass*** die Lüftungsöffnung mit einem gegen Insekten wirkenden Netz (25a) ausgestattet ist, das sich zwischen dem oberen (18) und dem unterem (19) Lauf erstreckt.

11. Gewächshaus nach einem der Ansprüche 8 bis 10, ***gekennzeichnet durch*** eine Hebebaugruppe (4'), die dazu befähigt ist, radial auf den oberen Rand (21a) der oder einer der in Höhenrichtung verschiebbaren Seitenflanke(n) (21) zu wirken, um beim Vorgang des Herablassens die Haltekräfte aufzuheben, welche sie auf diesen Rand (21a) ausübt, und das Herablassen der Flanke (21) unter Einwirkung des Gewichts derselben zu ermöglichen, und beim Vorgang des Anhebens auf den oberen Rand (21a) radiale Zugkräfte auszuüben, die nach oben gerichtet sind, um diese Flanke auszubreiten und die seitliche Lüftungsöffnung zu schließen, wobei die Hebebaugruppe (4') aus Folgendem besteht:
- mindestens einem Relaismodul (40') zum Anheben und Herablassen, das an dem entsprechenden Ständer (111) eines der dazwischenliegenden Bögen (11) befestigt ist, und zwar oberhalb der entsprechenden anhebbaren Seitenflanke (21), wobei das Modul mit einem Stück (45') zum teilweisen Aufrollen ausgestattet ist,
- ein horizontales Steuerorgan (41'), auf welches einerseits ein Zugmittel und andererseits ein Rückholorgan einwirken,
- mindestens ein Hebebindeglied (44'), das einerseits am oberen Rand (21a) der Seitenflanke (21) und andererseits an dem Steuerorgan (41') befestigt ist, wobei das Hebebindeglied (44'), zwischen dem oberen Rand (21a) der Seitenflanke (21) und dem Steuerorgan (41'), derart mit dem Stück (45') zum teilweisen Aufrollen zusammenwirkt, dass ein teilweises Aufrollen erfolgt,
- mindestens ein längliches Führungselement, mit welchem das oder jedes der Relaismodul(e) (40') versehen ist, wobei das längliche Führungselement das horizontale Steuerorgan (41') aufnimmt.

12. Gewächshaus nach dem vorhergehenden Anspruch, ***dadurch gekennzeichnet, dass*** das längliche Führungselement von dem oberen Lauf (18) gebildet wird, wobei das Steuerorgan (41') in das Innenvolumen des oberen Laufs eingreift.

13. Gewächshaus nach einem der Ansprüche 11 oder 12, ***dadurch gekennzeichnet, dass*** das Relaismodul (40') an dem entsprechenden dazwischenliegenden Bogen (11) befestigt ist und formschlüssig den oberen Lauf (18) aufnimmt, um diesen zu unterstützen, wobei das Relaismodul (40') ein obere Haube (405'), welche das Stück (45') zum teilweisen Aufrollen aufnimmt, und ein Formschlusselement (407') aufweist, welches in den oberen Lauf (18) eingreift, um den letzteren befestigend aufzunehmen, wobei das Formschlusselement (407') sich seitlich an die Haube (405') anschließt, welche umgekehrt U-förmig ist und zwei parallel angeordnete vertikale Seitenschenkel (405a', 405b') und einen Basisschenkel umfasst, welcher sich im oberen Abschnitt befindet,
- wobei sich das Formschlusselement (407') seitlich an den ersten Seitenschenkel (405a') der Haube (405') anschließt,
- wobei der zweite Schenkel (405b') der Haube (405') derart befestigt ist, dass er an der Vorderseite des entsprechenden Ständers (111) des entsprechenden Bogens anliegt,
- wobei die beiden Seitenschenkel (405a', 405b') der Haube (405') durchgehend durchbohrt sind, um die Organe (405c') zum Befestigen an dem entsprechenden Ständer (111) aufzunehmen, und
- wobei die Befestigungsorgane (405c') mit einer Klemmlasche (405d') in Verbindung stehen, welche gegenüberliegend der Haube (405') derart angebracht ist, dass sie am Ständer (111) anliegt.

14. Gewächshaus nach dem vorhergehenden Anspruch, ***dadurch gekennzeichnet, dass*** das Formschlusselement (407') aus Folgendem gebildet ist:
- einem horizontalen ersten Schenkel (407a'), der sich rechtwinklig, zum Äußeren der Haube (405') hin, an den ersten Seitenschenkel (405a') der letzteren anschließt,
- einem Schenkel (407b'), der nach oben hin geneigt ist und sich, zum Äußeren der Haube (405') hin, an den horizontalen ersten Schenkel (407a') anschließt,
- einem horizontalen zweiten Schenkel (407c'), der sich, zum Äußeren der Haube (405') hin, an den geneigten Schenkel (407b') anschließt,
- dass der vertikale erste Schenkel der Haube (405a'), der horizontale erste Schenkel (407a') und der geneigte Schenkel (407b') einen Aufnahmeraum begrenzen, in welchem die obere Rückbiegung (185) des oberen Laufs (18) und der obere Abschnitt der Wand (183) angeordnet sind, und dass der horizontale zweite Schenkel (407c') die horizontale obere Wand (181) des oberen Laufs (18) derart aufnimmt, dass sie darauf aufliegt.

15. Gewächshaus nach einem beliebigen der vorhergehenden Ansprüche, ***dadurch gekennzeichnet, dass*** die beiden vorderen Bögen (10) und (11) und die beiden hinteren Bögen (10) und (11) des Gerüsts (1) mit Stützkreuzen aus steifen Baugliedern (15, 17) versehen sind, wobei sie zwei nicht verformbare unabhängige Baugruppen bilden, die dazu befähigt sind, die Zugkräfte aufzunehmen, welche von der oder von jeder der biegsamen Querstrebe(n) (13, 14) ausgeübt werden.

16. Gewächshaus nach einem beliebigen der vorhergehenden Ansprüche, ***dadurch gekennzeichnet, dass*** die Ständer (101, 111) jedes der Bögen (100, 110) von gleicher Höhe oder von unterschiedlicher Höhe sind.

## Claims

1. A greenhouse for the cultivation of food plants and other plants, formed by a supporting framework (1) and a watertight cover (2) which is transparent to light and which is securely mounted on the framework (1), the framework being formed by two end arches (10) and intermediate arches (11), said end arches (10) and intermediate arches (11) being parallel, equidistant and joined to one another by at least one strut (13, 14), each arch comprising two rectilinear vertical leg assemblies (101a) by means of which it is embedded in two posts embedded in the ground, two uprights (101, 111) in the extension of the leg assemblies and an arcuate upper portion (100, 110) attached to the two uprights (101, 111) and said cover (2) being held on the two end arches (10) by clamping means and on the intermediate arches by tethers (22) installed on said cover (2) and disposed under tension in pairs on either side of each intermediate arch (11), and said cover (2) forming a dome (20) in the upper portion and two longitudinal lateral flanks (21) extending from the dome that is formed, towards the ground by bearing on the framework (1), ***characterized in that*** at least one strut (13, 14) is formed by a flexible element secured to different arches, said flexible strut being disposed under tension between the arches and being covered by the cover (2).

2. The greenhouse as claimed in claim 1, ***characterized in that*** it comprises a flexible strut (13) occupying an uppermost position, and at least two flexible struts (14) each occupying lateral positions above one of the lateral flanks (21).

3. The greenhouse as claimed in the preceding claim, ***characterized in* that** at least the uppermost strut (13) is formed by an inflatable sheath.

4. The greenhouse as claimed in the preceding claim, ***characterized by*** means for securing the uppermost strut (13) to the framework of the greenhouse, said means being developed on either side of the uppermost strut (13) and securing the uppermost strut to the arches (10 and 11), each securing means being constituted by at least one elastic connection (133) and at least one mechanical connecting interface secured to the strut (13) and securely receiving at least one elastic connection (133) which is secured to the corresponding arch (10, 11) of the framework (1) of the greenhouse.

5. The greenhouse as claimed in any one of the preceding claims, ***characterized in that*** at least one lateral flank (21) is disposed so as to be displaceable in height in order to occupy either a position of opening of a lateral ventilation opening or a position of closure of this opening and **in that** the ventilation opening or each ventilation opening is opened by lifting the corresponding lateral flank (21), the entire length of the lower edge of the lateral flank receiving a longitudinal strip (210) which is elastically deformable both axially and radially, said strip (210) being rigidly secured to the lower portion of the two end arches (10) by its two ends and said strip (210) being placed under tension between the two end arches (10).

6. The greenhouse as claimed in the preceding claim, ***characterized in that*** lifting of the or each liftable lateral flank (21) is mechanised and **in that** said flank is firmly secured to a centrally controlled external lifting assembly (4) by the action of which the lower edge of said flank is moved away from the ground in order to open the ventilation opening, or in fact it is brought back to rest on the ground in order to close said opening, the lifting assembly (4) comprising:
- at least one external guiding and holding module (40) occupying a fixed position with respect to the arches which is above the corresponding liftable lateral flank (21) formed by the cover (2), said external module comprising at least one guide path formed by a guide groove with a V-shaped cross section,
- a horizontal control means (41) engaged and guided in the guide path comprised in the external module (40), said control means (41) being firmly secured on the one hand to a traction means (42) and on the other hand to a return member (43),
- at least one lifting rope (44) secured on the one hand to the lower edge of said lateral flank (21), and on the other hand to said control means, said lifting rope (44) cooperating between the lower edge of the lateral flank (21) and the control means (41) with a part-turn piece (45) secured to the external guide module (40) to execute a part-turn, the point of attachment of the lifting rope (44) to the lower edge of the lateral flank (21) being situated vertically in line with the part-turn piece (45),
each upright (110) corresponding to the liftable lateral flank (21) being equipped with a securing support to which an external guide module (40) with which a dedicated lifting rope (44) cooperates is secured through the cover (2).

7. The greenhouse as claimed in the preceding claim, ***characterized in that*** the external guide module (40) comprises a flat plate (400) comprising two opposed large faces (400a, 400b), one (400b) of which being turned outwards, **in that** the plate (400) carries at least one pin (402) which extends outwards from the large face (400b), onto which pin the inner ring of a ball bearing (404) is fitted and on which a lateral retention element (406) which is arcuate, without any sharp angles and extends upwards, is secured, defining a guide path with the outer ring of the ball bearing (404) which guides and accommodates the horizontal control means (41), and **in that** below and at a distance from the guide path that is formed, in line with the gap between the two bearings (404), the plate (400) securely receives a part-turn piece (45) which is cylindrical in shape, comprising a curved turning surface (45a) on which the lifting rope (44) slides.

8. The greenhouse as claimed in one of claims 1 to 4, ***characterized in that*** at least one lateral flank (21) is disposed so as to be displaceable in height in order to occupy either a position of opening of a lateral ventilation opening or a position of closure of this opening, and the ventilation opening or each ventilation opening is formed between a horizontal upper rail (18) and a horizontal lower rail (19), **in that** the horizontal upper rail (18) is securely installed with respect to the arches (10, 11), **in that** the horizontal lower rail (19) is secured to the corresponding uprights (100, 111) of the arches (10, 11) by means of stirrups, and **in that** said opening is opened by lowering the corresponding lateral flank (21), and is closed by lifting said flank (21), said flank comprising an upper edge (21a) which is free to be displaced and is secured by its two ends alone to the two end arches (10), this being as close as possible to the upper rail (18).

9. The greenhouse as claimed in the preceding claim, ***characterized in that*** the upper rail (18) comprises four perpendicular walls which are in pairs, namely a front wall (180), two horizontal side walls, upper (181) and lower (182), and a vertical rear wall (183), **in that** the rear wall (183) has a median longitudinal slot (184) bordered by two horizontal right-angled returns both orientated towards the front wall, namely an upper return (185) and a lower return (186), **in that** said rail (18) comprises a plurality of longitudinal horizontal grooves (180a) which are open towards the outside and formed by deformation of the front wall (180), **in that** the lateral flank (21) corresponding to the ventilation opening is separated from the upper portion of the cover (2) and is secured to the lower rail (19) by its lower horizontal zone, **in that** the upper portion of the cover is secured in the upper groove (180a) of the upper rail (18) by its corresponding edge and **in that** the entire length of the upper edge (21a) of said flank (21) is equipped with an elastically deformable longitudinal strip (213).

10. The greenhouse as claimed in claim 8 or claim 9, ***characterized in that*** the ventilation opening is equipped with an insect-proof net (25a) extending between the upper rail (18) and the lower (19) rail.

11. The greenhouse as claimed in one of claims 8 to 10, ***characterized by*** a lifting assembly (4') which is capable of acting radially on the upper edge (21a) of the or one of the lateral flanks (21) which can be displaced in height in order, during the action of lowering, to release the holding forces which it applies to this edge (21a) and allow the flank (21) to drop under the effect of its own weight, and during the action of lifting, to exert radial traction forces on this upper edge (21a) which are upwardly orientated in order to unfurl said flank and close the lateral ventilation opening, said lifting assembly (4') being constituted by:
- at least one lifting and lowering relay module (40') secured to the corresponding upright (111) of one of the intermediate arches (11) and above the corresponding liftable lateral flank (21), said module being equipped with a part-turn piece (45'),
- a horizontal control means (41') firmly secured on the one hand to a traction means and on the other hand to a return means,
- at least one lifting connection (44') secured on the one hand to the upper edge (21a) of said lateral flank (21) and on the other hand to said control means (41'), said lifting connection (44') cooperating between the upper edge (21a) of the lateral flank (21) and the control means (41') with the part-turn piece (45') in order to execute a part-turn,
- at least one elongated guide element carried by the or each relay module (40'), said elongate guide element accommodating the horizontal control means (41').

12. The greenhouse as claimed in the preceding claim, ***characterized in that*** the elongated guide element is formed by the upper rail (18), the control means (41') being engaged in the internal volume of said upper rail.

13. The greenhouse as claimed in claim 11 or claim 12, ***characterized in that*** the relay module (40') is secured to the corresponding intermediate arch (11) and receives the upper rail (18) in interlocking engagement in order to support the upper rail, said relay module (40') comprising an upper clevis (405') accommodating the part-turn piece (45') and a shape for interlocking (407') engaged in the upper rail (18) in order to securely receive the latter, said interlocking shape (407') laterally extending the clevis (405') which is itself in the form of an inverted U and comprises two vertical parallel lateral wings (405a', 405b') and a basal wing in the upper portion,
- the first lateral flange (405a') of the clevis (405') being extended laterally by the interlocking shape (407'),
- the second flange (405b') of the clevis (405') being secured against the front face of the corresponding upright (111) of the corresponding arch,
- the two lateral wings (405a', 405b') of the clevis (405') being pierced through in order to receive means (405c') for securing to the corresponding upright (111), and
- the securing means (405c') being associated with a clamping flange (405d') applied against the upright (111), opposite the clevis (405').

14. The greenhouse as claimed in the preceding claim, ***characterized in that*** the interlocking shape (407') is formed by:
- a first horizontal wing (407a') extending the first lateral wing (405a') of the clevis (405') at right angles towards the outside of the clevis (405'),
- a wing (407b') which is upwardly inclined, extending the first horizontal wing (407a') towards the outside of the clevis (405'),
- a second horizontal wing (407c') extending the inclined wing (407b') towards the outside of the clevis (405'),
- **in that** the first vertical wing of the clevis (405a'), the first horizontal wing (407a') and the inclined wing (407b') define a housing in which the upper return (185) of the upper rail (18) and the upper portion of the wall (183) are disposed, and **in that** the second horizontal wing (407c') bears on the horizontal upper wall (181) of the upper rail (18).

15. The greenhouse as claimed in any one of the preceding claims, ***characterized in that*** the two front arches (10) and (11) and the two rear arches (10) and (11) of the framework (1) are braced by rigid booms (15, 17) and form two independent non-deformable assemblies which are capable of absorbing the tensile forces applied by the or each flexible strut (13, 14).

16. The greenhouse as claimed in any one of the preceding claims, ***characterized in that*** the uprights (101, 111) of each arch (100, 110) are of the same height or have different heights.
